# EUROPEAN PATENT APPLICATION

(11) **EP 0 551 979 A2**
(43) Date of publication of application: **21.07.1993**
(21) Application number: 93300042.4
(22) Date of filing: 05.01.1993
(51) Int. Cl.: H04N 7/13

(54) **High efficiency coding apparatus**

(30) Priority: 14.01.1992 JP 4511/92; 03.06.1992 JP 142476/92; 18.08.1992 JP 218975/92; 10.09.1992 JP 241593/92; 02.11.1992 JP 294123/92
(71) Applicant: MATSUSHITA ELECTRIC INDUSTRIAL CO., LTD., Kadoma-shi, Osaka-fu 571 (JP)
(72) Inventor: Juri, Tatsuro, Osaka-shi, Osaka 534 (JP); Yamauchi, Eiji, Katano-shi, Osaka-fu 576 (JP); Nishino, Masakazu, Kashiwara-shi, Osaka-fu 582 (JP)
(74) Representative: Crawford, Andrew Birkby

(57) **Abstract**

A coding apparatus decimates the sample values of an input signal and collects the remaining transmission samples into blocks, whereby such blocks contain samples of different fields. The said blocks undergo an orthogonal transform.
In a second embodiment, the composition of blocks depends on the inherent motion; in case of motion only samples of one and the same field are used. A mode information is included.
As a third embodiment, a recording apparatus id disclosed, which uses the decimation only in case of long playing mode.
The fourth embodiment splits the input signal into horizontal and vertical frequency bands and performs a frequency conversion of the high band of vertical lows.

## Description

### BACKGROUND OF THE INVENTION

### 1. Field of the Invention

The present invention relates to a high efficiency coding apparatus for reducing the transmission rate of video signals.

### 2. Description of the Prior Art

Video information is generally processed by high efficiency coding, when transmitting or recording, in order to curtail the quantity of data. High efficiency coding is means for compressing the quantity of data by removing the redundant portions of the video information. In a method of high efficiency coding, an input sample value is first divided into small blocks composed of adjacent plural pixels, and each small block is orthogonally transformed to be coded in each orthogonal transform. As the orthogonal transformation, Fourier transformation, discrete cosine transformation (DCT), and Hadamard transformation are well known among others. In particular, the DCT is noted as the orthogonal transformation suited to image information. In the high efficiency coding methods making use of these transformation coding techniques, the transformed components are quantized, coded in various length, and transmitted.

Variable length coding is a method of coding a signal with high frequency of incidence into a code word with small number of bits, and coding a signal with low frequency of incidence into a code word with large number of bits. As a result, data can be transmitted by a small number of bits in average. Therefore, in the conventional apparatus for recording or transmitting video information, recording and reproduction were conducted after curtailing the quantity of data by such variable length coding.

As a method of further enhancing the rate of compression, it is known to curtail the number of input sample values by decimating the sample values. This is a method of decimating sample values in every other sample value, and the aliasing distortion due to sample value decimation is eliminated by using a filter for reducing the aliasing distortion. Thus, by curtailing the number of sample values to half in the input stage, the rate of compression may be improved. As an example of this, An Experimental Digital VTR Capable of 12-Hour Recording is disclosed in the IEEE Transactions on Consumer Electronics (Vol. CE-33, No. 3, August 1987). Herein, the input signal is curtailed to 1/2 in the number of sample values by using sub-Nyquist filter, and is compressed by Hadamard transformation.

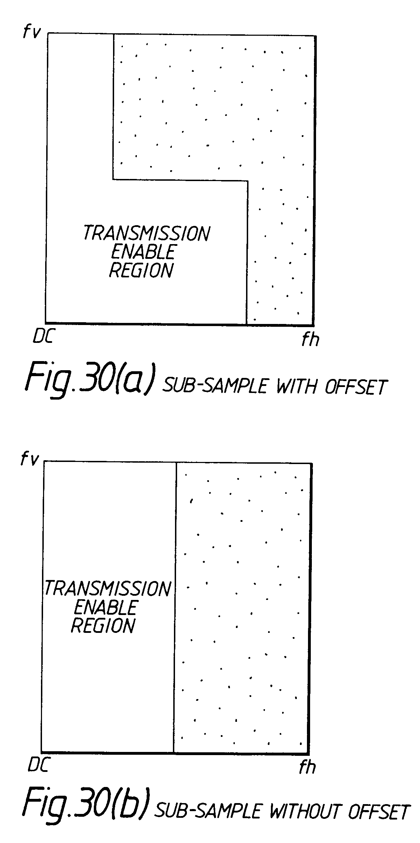

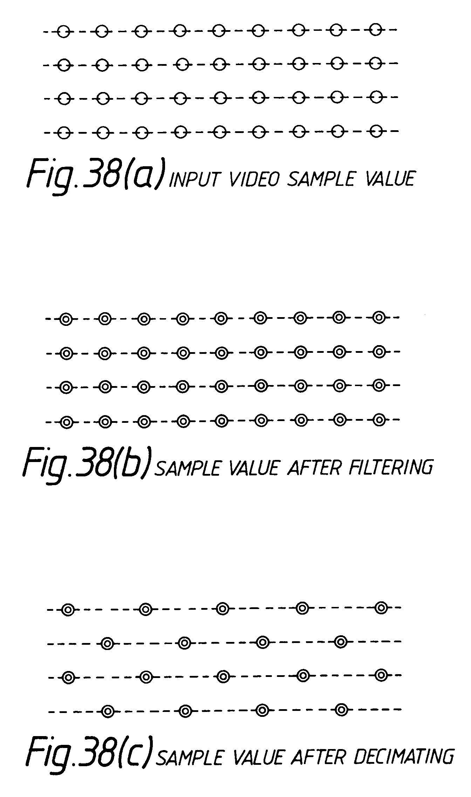

Sub-sample coding is a method of curtailing the quantity of data by decimating the samples to be transmitted. A conventional example of sub-sample coding is explained below by referring to Fig. 30 and Fig. 38.

Fig. 38 (a) shows the positions of samples of video signals entered in each line. The broken line in Fig. 38 represents a TV scanning line, and the circle indicates an input sample. The input sample value is limited in band by a filter and transformed as shown in Fig. 38 (b) in order to decrease the effect of aliasing distortion due to sample decimation. The double circle in Fig. 38 indicates a sample after band limitation by filter. The band-limited sample value is decimated in every other sample as shown in Fig. 38 (c), and is transmitted.

In the prior art in Fig. 38, the positions of samples to be decimated are offset in every line as shown in Fig. 38 (c). By such sub-sample coding, the region that can be transmitted is expressed as in Fig. 30 (a). Fig. 30 shows the two-dimensional frequency region in the horizontal direction and vertical direction. In Fig. 30, as going toward the top, the frequency component in the vertical direction is higher, and as going toward the right side, the frequency component in the horizontal direction is higher. Thus, in the example in Fig. 38, it is known that the region high in frequency in both horizontal and vertical directions may not be transmitted depending on sub-samples. For the human vision, however, deterioration of frequency high in both horizontal and vertical direction is hardly discernible, and therefore the image quality deterioration may be substantially decreased.

By using such conventional coding apparatus, however, the following problems may occur.
(1) In transmission or recording of video signals, for curtailing the transmission rate or extending the recording time, the rate of compression of video signals must be sometimes raised two times. But when the rate of compression is raised twice by intensifying the quantization, it results in a significant deterioration of picture quality.
(2) In the method of decimating the sample values, although the number of input sample values is cut to 1/2, but the distance between sample values is extended twice (the size of the block on the screen of the orthogonally transformed block is twice as large), which may lead to deterioration of compression efficiency. Furthermore, the number of input sample values is different from the case of not decimating the sample values, and hence the number of blocks of orthogonally transformed blocks per field differs. As a result, the actual compression processing, or transmission or recording format may change substantially, which gives rise to increase of the circuit scale.
(3) When the sub-sample filter is composed as described herein (the conventional sub-sample filter in the field), the positions of samples to be transmitted are offset in every line. After execution of sub-sample coding, when further compressing the band by orthogonal transformation or the like, the compression efficiency is significantly impaired. To the contrary, when not offsetting the positions of samples to be transmitted (the conventional sub-sample filter in the line), the transmission region becomes as shown in Fig. 30 (b). In this case, the high frequency region in the horizontal direction cannot be transmitted at all, the sub-sample coding itself causes a marked deterioration of picture quality.
(4) As the method of extending the horizontal band without offsetting the transmission sample positions between lines, a method of offsetting between fields or between frames is known. In this method, however, the horizontal band deteriorates significantly in the moving picture portion.

To solve the above problems, hence, it is a primary object of the invention to present an apparatus not deteriorating the horizontal and vertical resolution, and not offsetting the positions of transmission sample points between lines. At the same time it is other object thereof to present a high efficiency coding apparatus capable of curtailing the number of sample values to 1/2 in the input stage of high efficiency coding by decimating the sample values, and not deteriorating the concentration efficiency of energy into low frequency in orthogonal transformation.

### SUMMARY OF THE INVENTION

In one aspect of the invention, the high efficiency coding apparatus comprises sample value decimating means for decimating sample values of input video signals in every other sample value to obtain transmission sample values, block forming means for collecting a plurality of transmission sample points obtained by the decimating means over plural fields to form blocks, and orthogonal transformation means for transforming orthogonally in every block obtained by the block forming means. By decimating sample values, the number of sample values is curtailed to 1/2 in the input stage. From two consecutive fields, one transmission field is composed. The transmission field obtained herein is same as the input field both in the number of horizontal sample values and in the number of vertical lines. Accordingly, when blocks of orthogonal transform are composed, in spite of sample value decimation, the size of block on the screen is same as that without sample value decimation. Hence, deterioration hardly occurs in the coding efficiency of high efficiency coding by orthogonal transformation. Therefore, while hardly deteriorating the image quality, the compression rate of high efficiency coding may be easily enhanced twice as high.

In one modification, the high efficiency coding apparatus comprises sample value decimating means for decimating sample values of input video signals in every other sample value to obtain transmission sample values, block forming means for collecting a plurality of transmission sample points obtained by the decimating means over plural fields to form blocks, motion detecting means for judging whether a moving picture block with a large motion or a still picture block with a small motion among fields in the block in every block obtained by the block forming means, orthogonal transformation means for transforming orthogonally on the basis of the orthogonal transform in each field when detected as moving picture block by the motion detecting means, or transforming orthogonally by combining plural fields as one still picture when detected as still picture block, coding means for coding the orthogonally transformed transmission sample value, and information transmission means for coding and transmitting the information showing whether detected as moving picture block or detected as still picture block by the motion detecting means. Judging whether moving picture or still picture in every block, the individually suited orthogonal transformation is applied. Therefore, even in the case of a block extending over plural fields, the redundancy removal capacity of orthogonal transformation can be utilized to the maximum extent, and picture quality deterioration may be prevented.

In another modification, the high efficiency coding apparatus comprises decimating means for decimating sample values to obtain transmission sample points by using a filter utilizing only the sample points in the same field in the portion with a large motion of the input video signal, and using a filter utilizing sample values between plural fields or between plural frames in the portion with a small motion, block forming means for collecting a plurality of transmission sample points obtained by the decimating means over plural fields to form blocks, orthogonal transformation means for transforming orthogonally transmission sample points within the block obtained by the block forming means, and coding means for coding the orthogonally transformed transmission sample values. In the moving picture portion, sample values are decimated by using the filter utilizing the sample values in the same field, and in the still picture portion, sample values are decimated by using the filter utilizing the sample values between plural frames. As a result, information of high band can be transmitted to the still picture, and a smooth moving picture may be realized at the time of moving picture.

In still another modification, the high efficiency coding apparatus comprises block forming means for collecting a plurality of transmission sample points of the input video signal over plural fields to form blocks, motion detecting means for judging whether a moving picture block with a large motion or a still picture block with a small motion among fields in the block in every block obtained by the block forming means, decimating means for decimating sample values to obtain transmission sample points by using a filter utilizing only the sample points in the same field for the sample values in the block detected as a moving picture block by the motion detecting means, and using a filter utilizing sample values between plural fields or between plural frames for the sample values in the block detected as a still picture block, orthogonal transformation means for transforming orthogonally on the basis of the orthogonal transform in every plural fields when detected as a moving picture block by the motion detecting means, and transforming orthogonally by combining the plural fields as one still picture when detected as a still picture block, coding means for coding the orthogonally transformed transmission sample values, and information transmission means for coding and transmitting the information showing whether detected as a moving picture block or detected as a still picture block by the motion detecting means. Judging whether moving picture or still picture in every block, the individually suited decimating filter and orthogonal transformation are applied. Accordingly, information of a wide band can be transmitted in the still picture, and a smooth moving picture may be realized at the time of moving picture. Even in the case of a block extending over plural fields, the redundancy removal capacity of orthogonal transformation may be utilized to the maximum extent, so that picture quality deterioration may be prevented.

In still another modification, the high efficiency coding apparatus comprises sample value decimating means for decimating sample values of input video signals in every other sample value to obtain transmission sample values, transmission field composing means for composing one field of transmission field from transmission sample values of consecutive two input fields obtained by the sample value decimating means, first block forming means for forming blocks from the transmission sample values contained in one field or plural fields of the transmission field obtained by the transmission field composing means, second block forming means for forming blocks containing the same sample value number as the first block forming means from the sample values contained in one field or plural fields of the input field, and orthogonal transformation means for orthogonally transforming in every block obtained by the first block forming means when high compression is required, and orthogonally transforming in every block obtained by the second block forming means when low compression is required. Since the number of samples is curtailed by 1/2 in the input stage of high efficiency coding by decimating the sample values, the compression rate may be improved significantly. Besides, one transmission field is composed from two consecutive fields. The transmission field obtained herein is same as the input field in both number of horizontal sample values and number of vertical lines. Accordingly, when a block of orthogonal transform is composed, in spite of decimation of sample values, the size of the block on the screen is same as that in the case without decimation of sample values. Hence, deterioration hardly occurs in the coding efficiency of the high efficiency coding employing the orthogonal transformation. Therefore, while hardly deteriorating the picture quality, the compression rate of high efficiency coding may be easily enhanced twice as high.

Furthermore, since the composition of the transmission field obtained in the invention is same as the input field, the conventional apparatus for direct high efficiency coding of the input field can be used as it is without modifying. Accordingly, the low compression mode for directly compressing the input field, and the high compression mode for compressing from the transmission field may be realized almost in a same circuit. Therefore, according to the invention, halving of the transmission rate and doubling of the recording time may be easily realized as required.

In another aspect of the invention, a decoding apparatus is an apparatus for reproducing a compressed signal from a medium, by composing one field or consecutive two fields of transmission field by using a sub-sample filter, and forming an orthogonal transform block by using the one or plural transmission fields, which comprises a transformer for inversely and orthogonally transforming the reproduction signal from the medium, a memory for storing the output signal of the transformer and sending out one identical transmission field consecutively in two-field period, and a filter for interpolating a non-transmission sample value on the basis of the transmission sample value sent out from the memory. After curtailing the transmission pixels to 1/2 by using the sub-filter in the field, one field to be transmitted is newly composed by consecutive two fields. Moreover, by forming a block of orthogonal transform from this transmission field, the efficiency of orthogonal transformation is raised, a long-time mode is realized while preventing deterioration of picture quality in decoding. The signal recorded in this method can be reproduced without having to add the signal recorded in the long-time mode newly in the field memory or the like, by sending out one reproduced transmission field continuously in a two-field period from the memory, and forming a non-transmission sample value by the filter in the line.

In still another aspect of the invention, the high efficiency coding apparatus comprises filter means for processing input video signals by band limiting and frequency converting, and decimating means for decimating the video signals limited in band by the filter means. Without having to offset the position of transmission sample in every line, the high frequency components in the horizontal direction may be transmitted. Accordingly, while minimizing the picture quality deterioration in the sub-sample coding, the efficiency of the succeeding band compression such as orthogonal transformation may be enhanced.

### BRIEF DESCRIPTION OF THE DRAWINGS

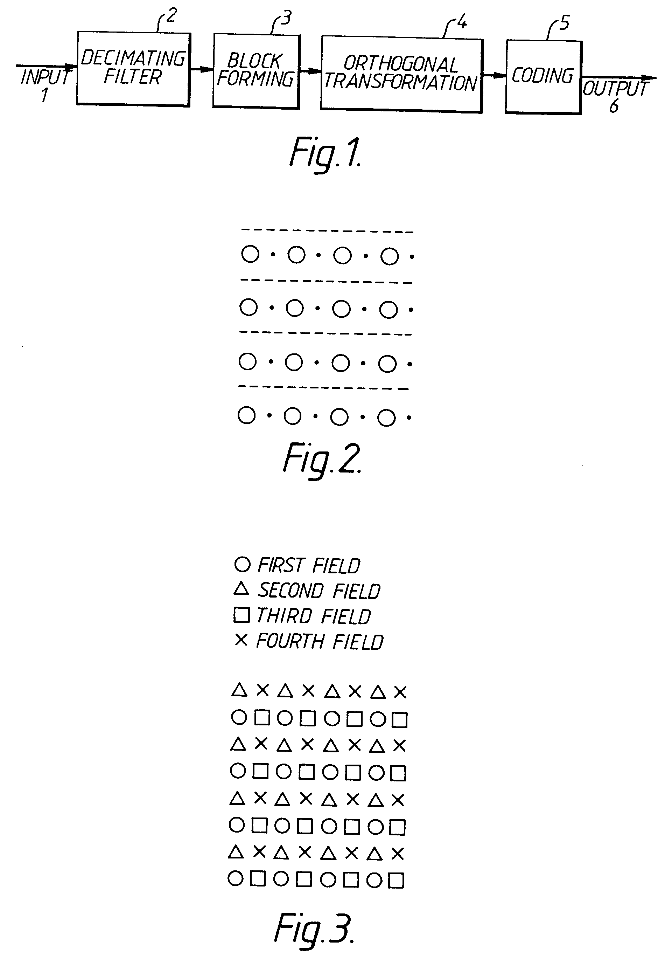

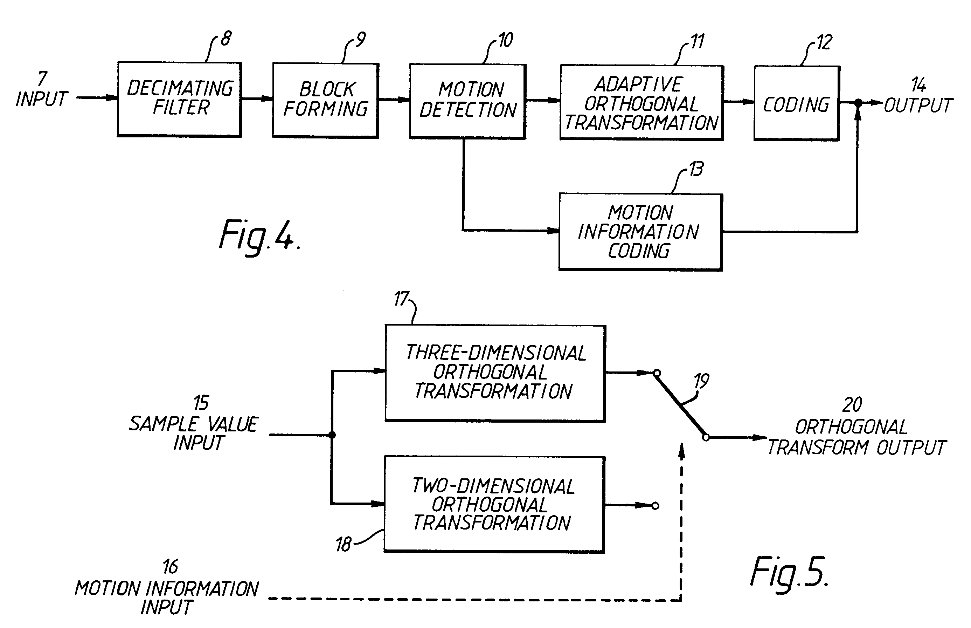

Fig. 1 is a block diagram of an embodiment of a high efficiency coding apparatus of the invention, Fig. 2 is an explanatory diagram of decimating means, and Fig. 3 is an explanatory diagram of block forming applied in the invention.

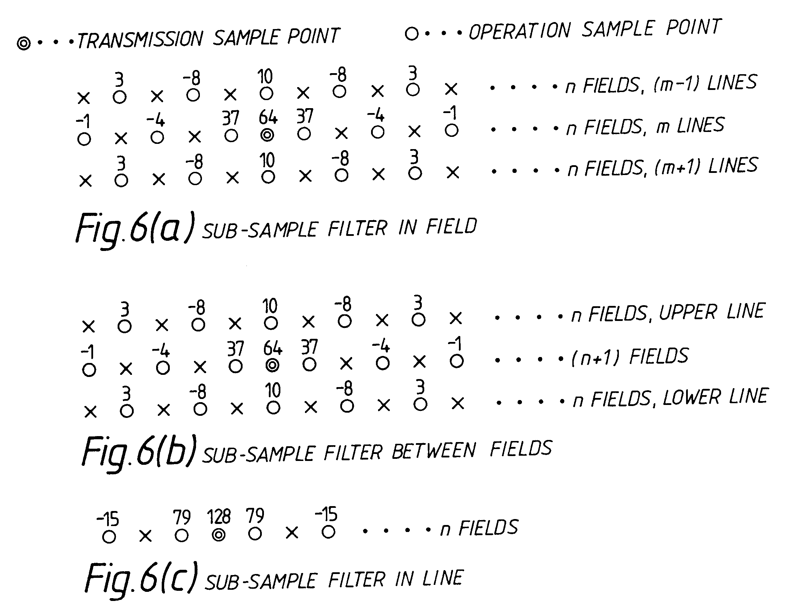

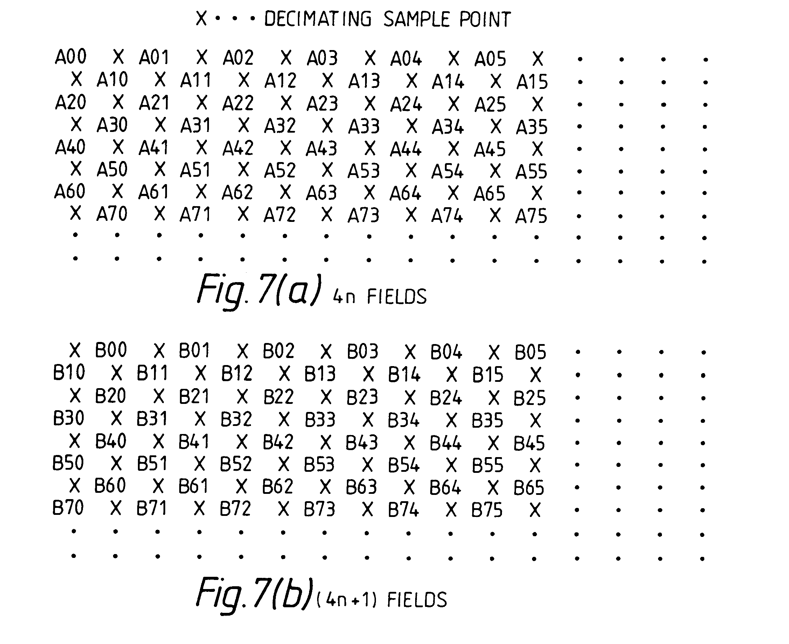

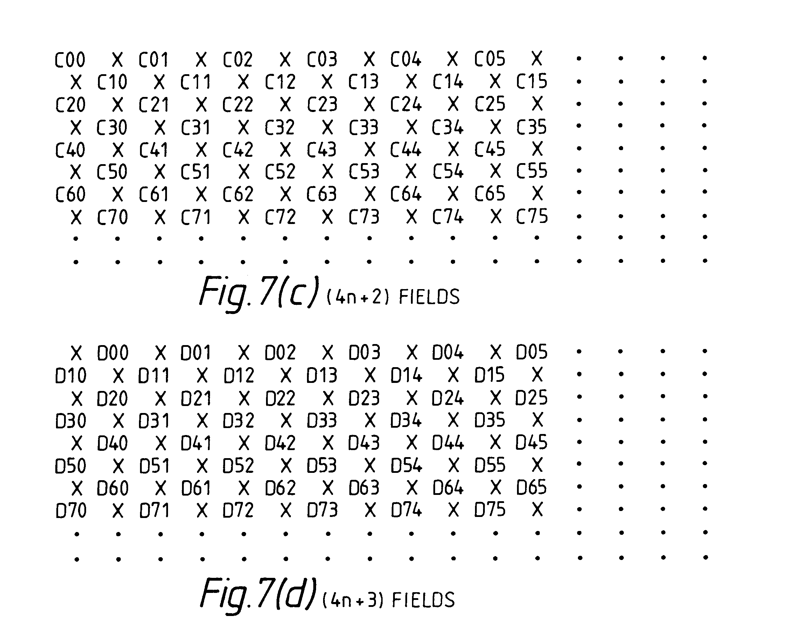

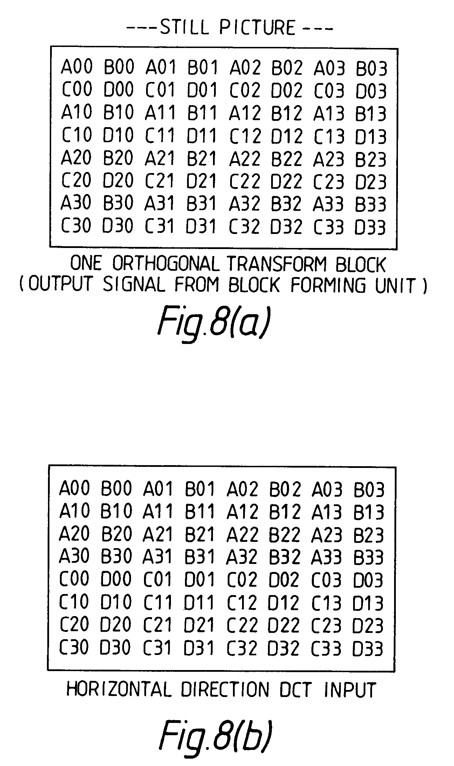

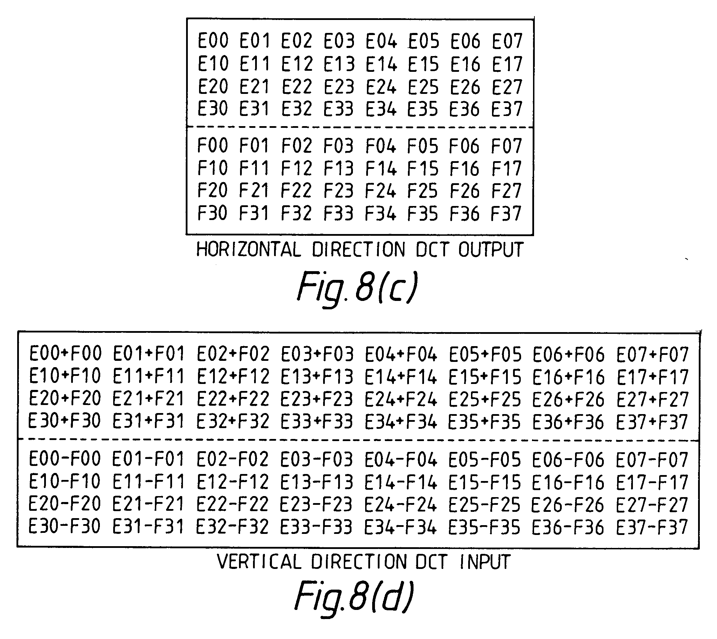

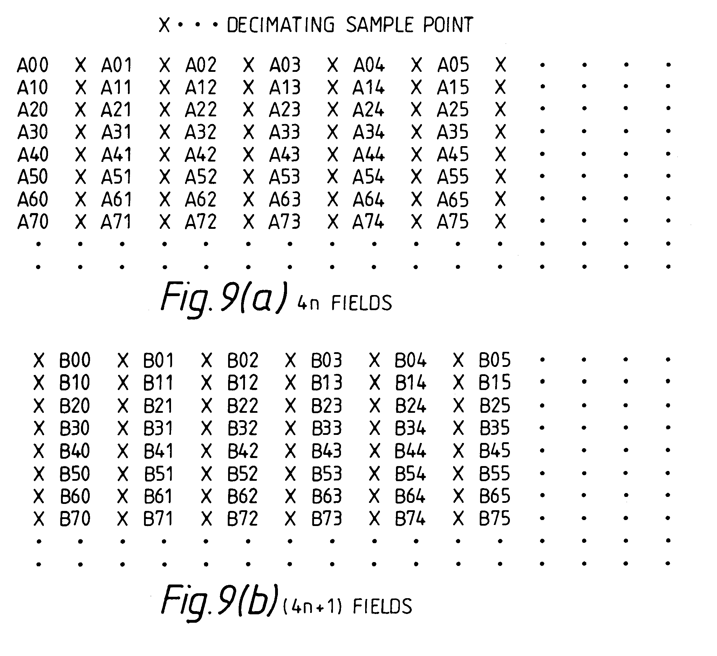

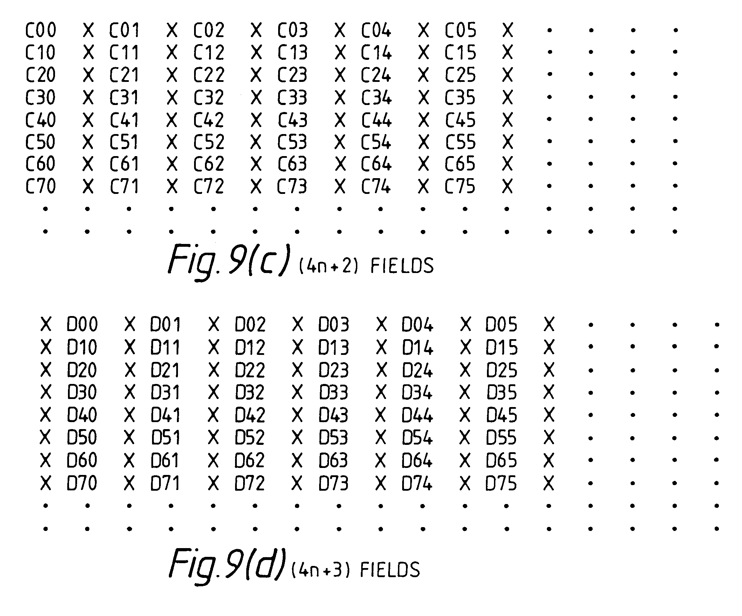

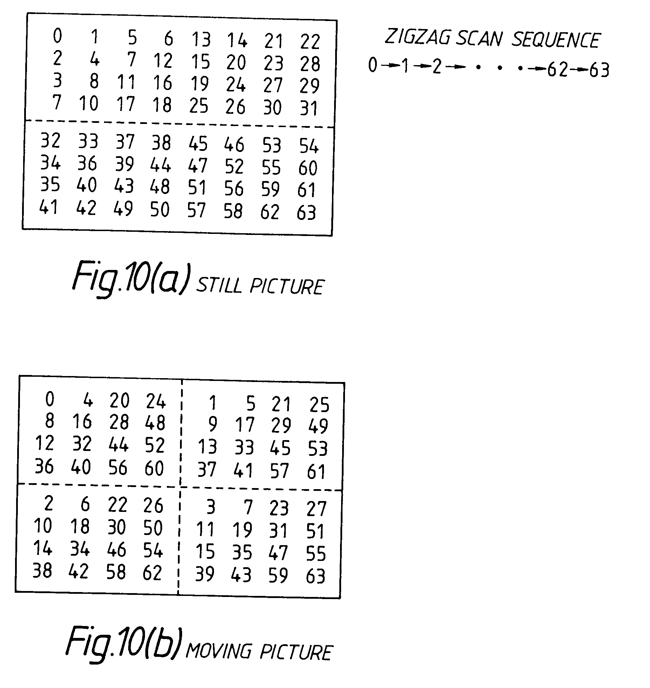

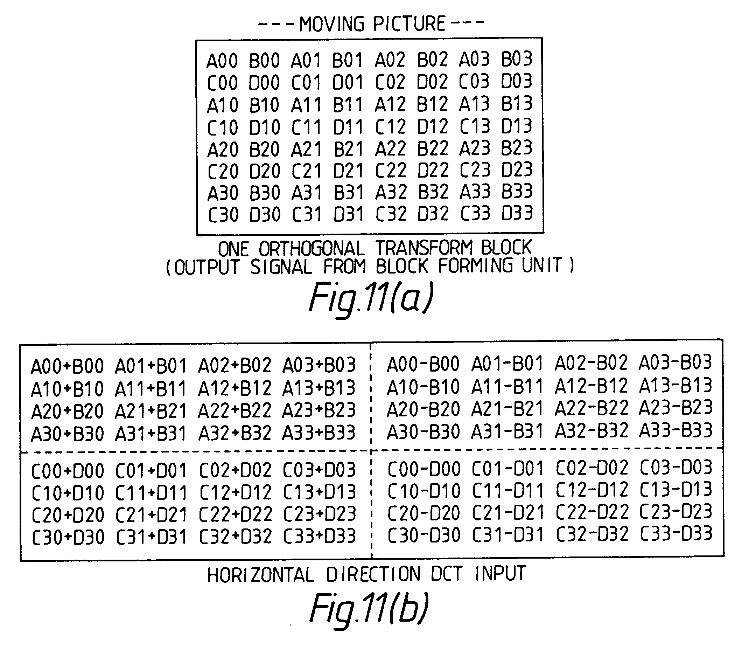

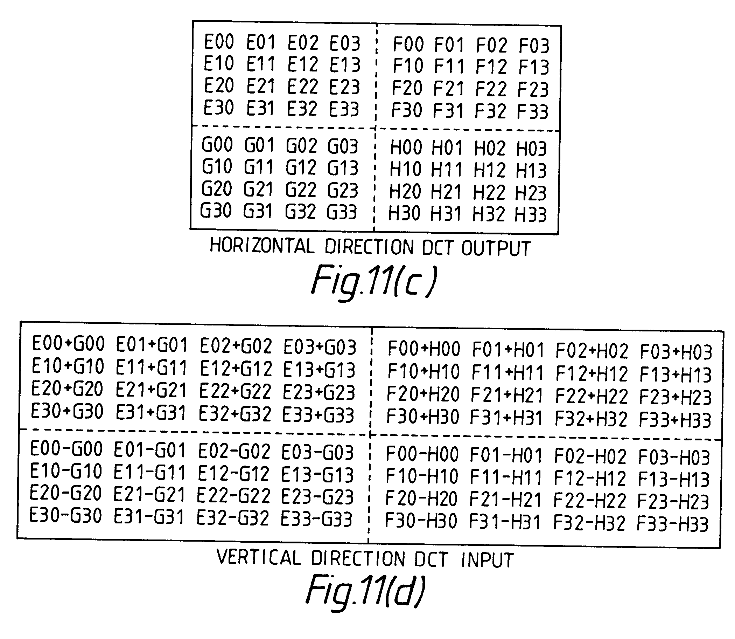

Fig. 4 is a block diagram of other embodiment of the high efficiency coding apparatus of the invention, Fig. 5 is an explanatory diagram of adaptive orthogonal transformation applied in the invention, Fig. 6 is an explanatory diagram of a sub-sample filter, Fig. 7 is an explanatory diagram of transmission sample point using a sub-sample filter in field, Fig. 8 is an operation explanatory diagram of orthogonal transformer at the time of input of still picture block, Fig. 9 is an explanatory diagram of transmission sample point when using a sub-sample filter between fields or in line, Fig. 10 is an explanatory diagram of zigzag scan sequence, and Fig. 11 is an operation explanatory diagram of orthogonal transformation at the time of input of moving picture block.

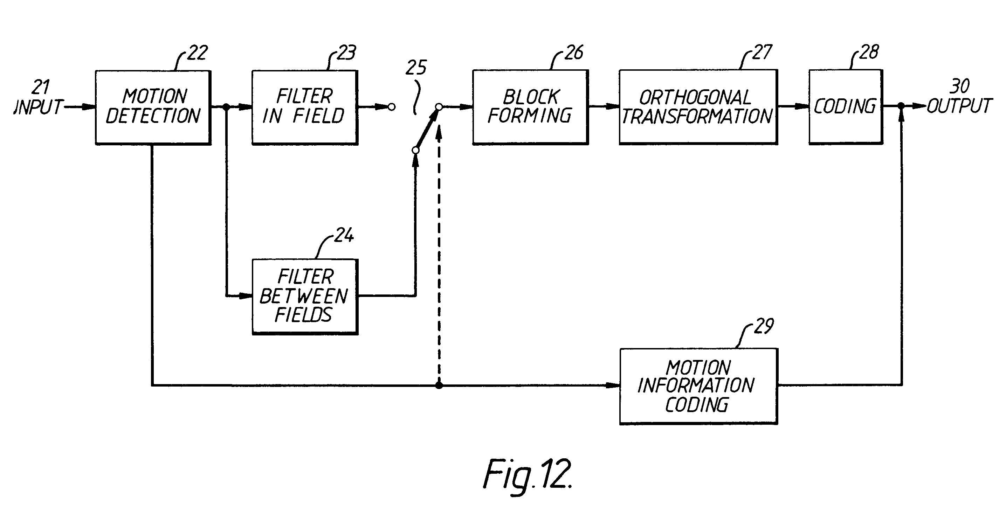

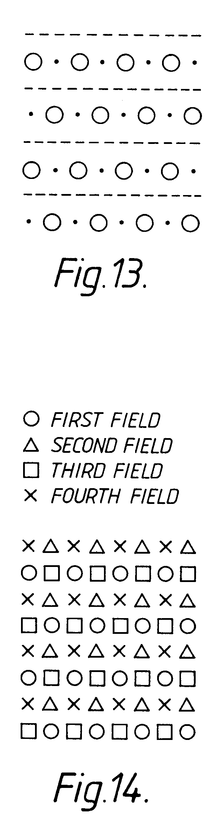

Fig. 12 is a block diagram of another embodiment of the high efficiency coding apparatus of the invention, Fig. 13 is an explanatory diagram of decimating means, and Fig. 14 is an explanatory diagram of block forming.

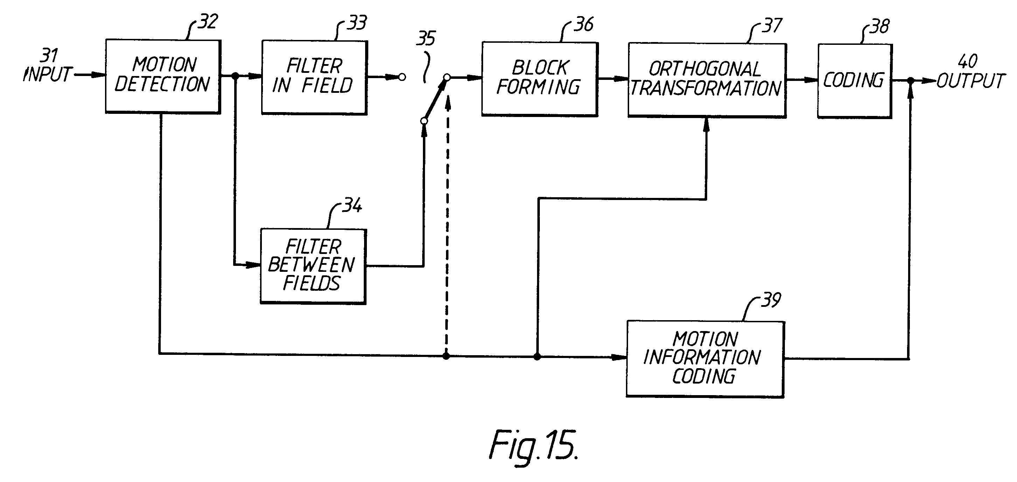

Fig. 15 is a block diagram of still other embodiment of the high efficiency coding apparatus of the invention.

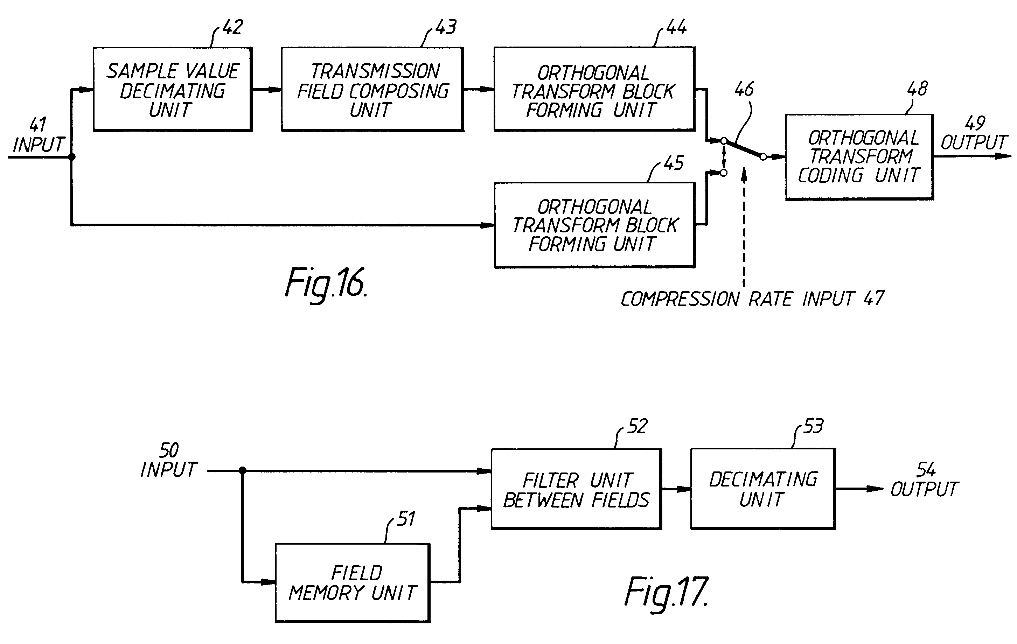

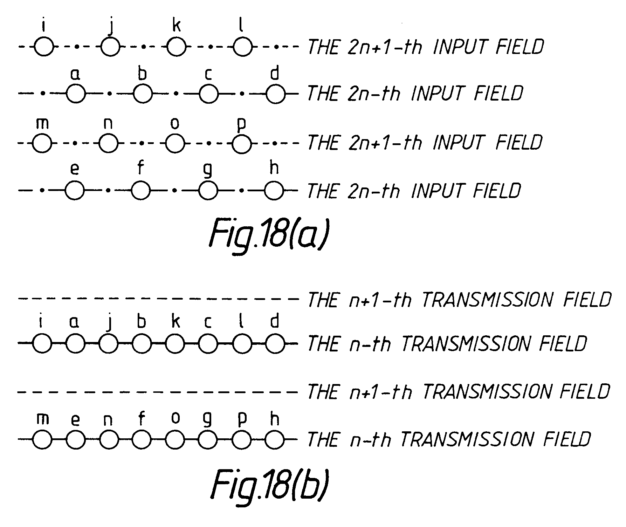

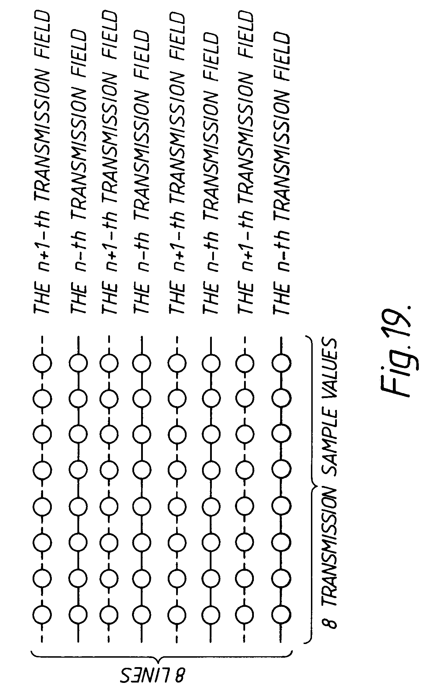

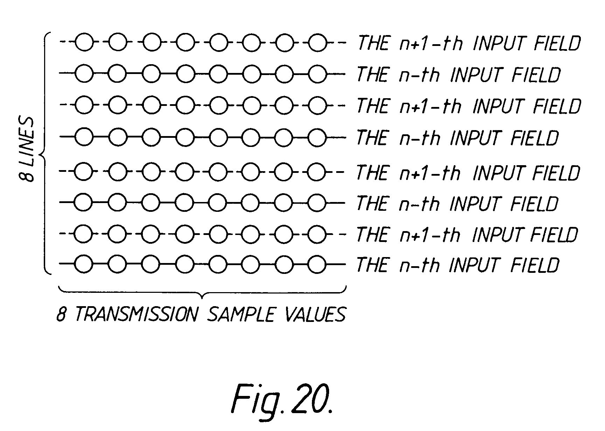

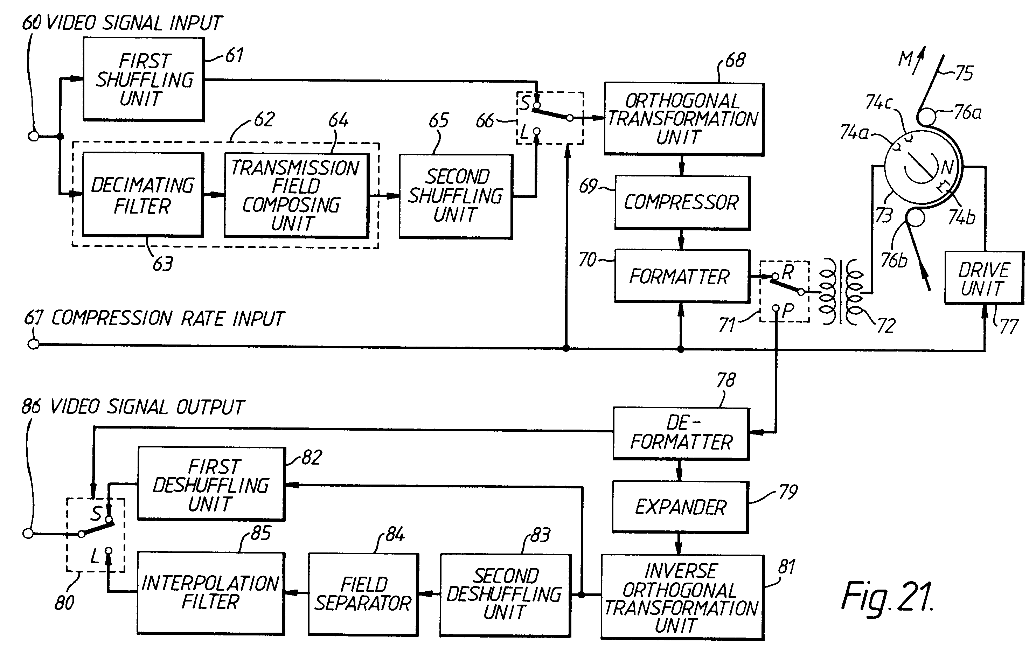

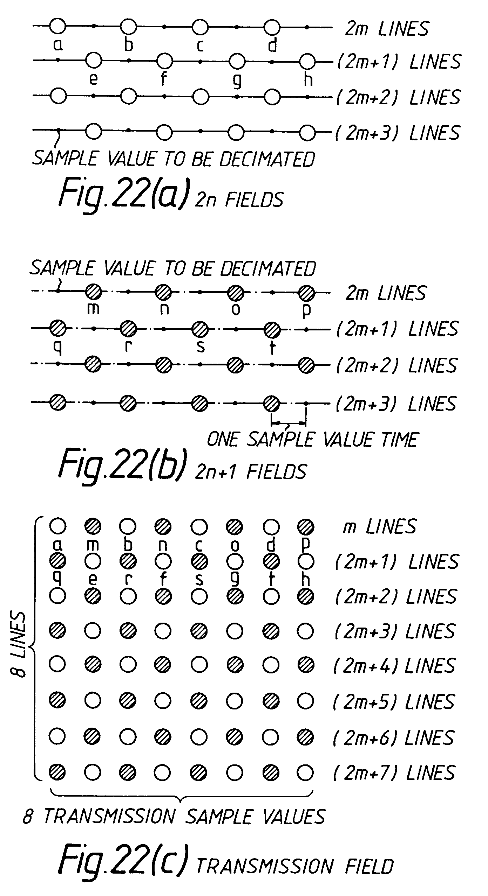

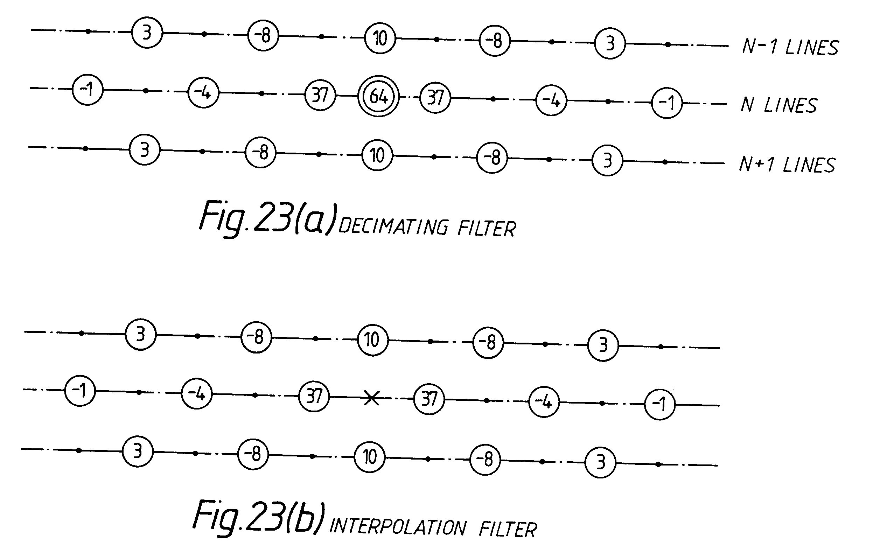

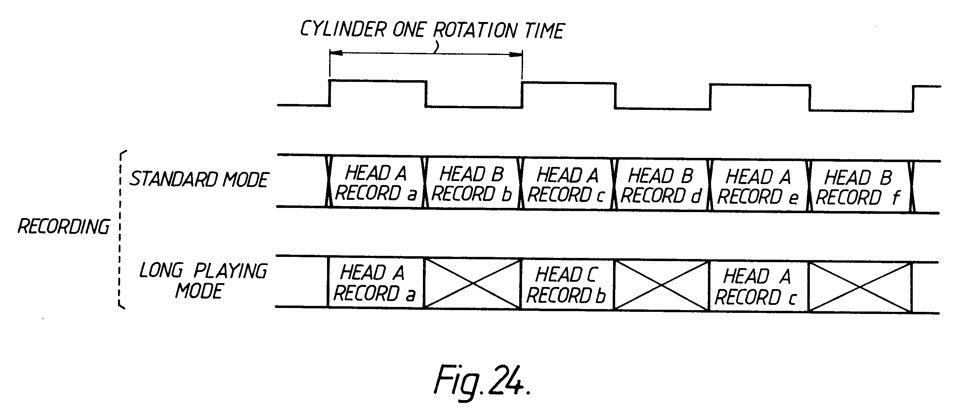

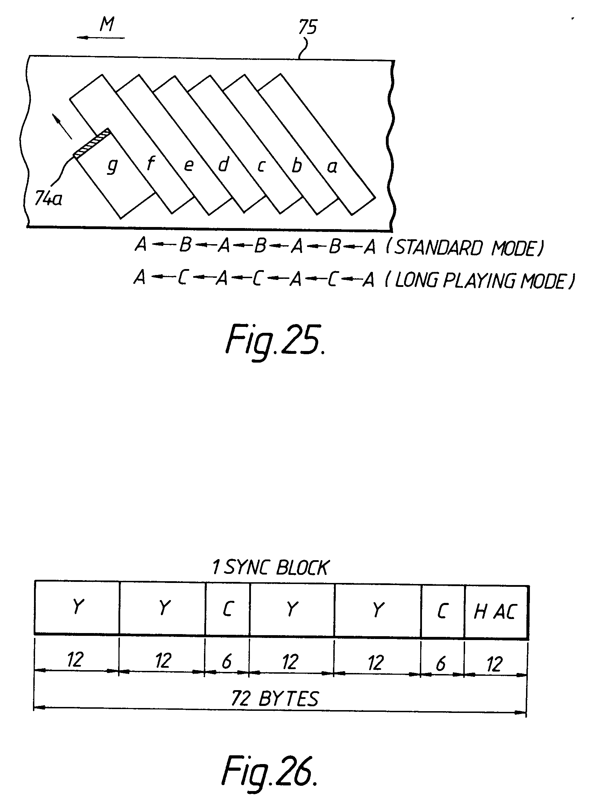

Fig. 16 is a block diagram of still another embodiment of the high efficiency coding apparatus of the invention, Fig. 17 is a block diagram of an example of sample value decimating unit, Fig. 18 is an explanatory diagram of an example of transmission field, Fig. 19 and Fig. 20 are explanatory diagrams of examples of orthogonal transform block, Fig. 21 is a block diagram of recording and reproducing apparatus using the high efficiency coding apparatus, Fig. 22 is an explanatory diagram of transmission sample value, Fig. 23 is a configuration of a sub-sample filter in field, Fig. 24 shows a recording and reproducing timing of signal, Fig. 25 is a track diagram of a tape, and Fig. 26 is a format explanatory diagram of video signal.

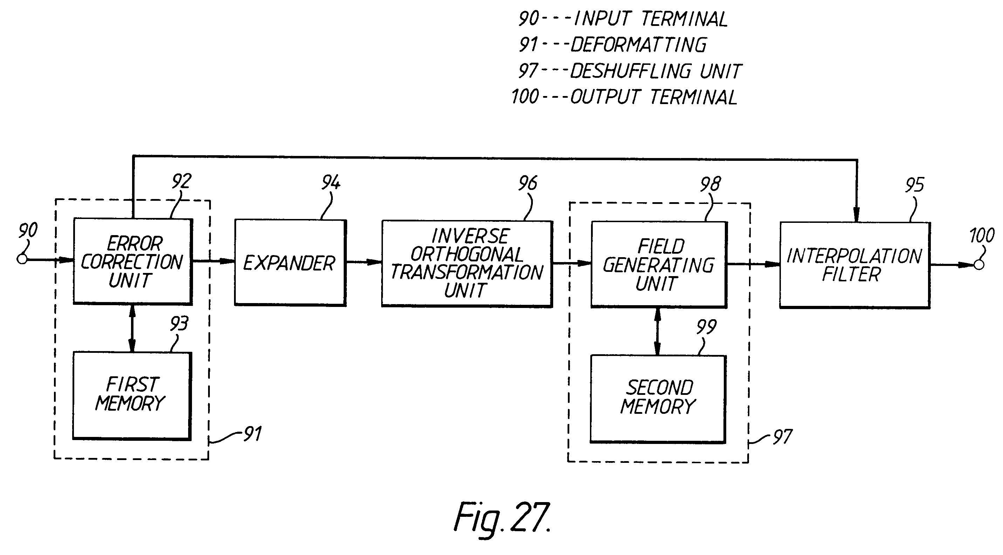

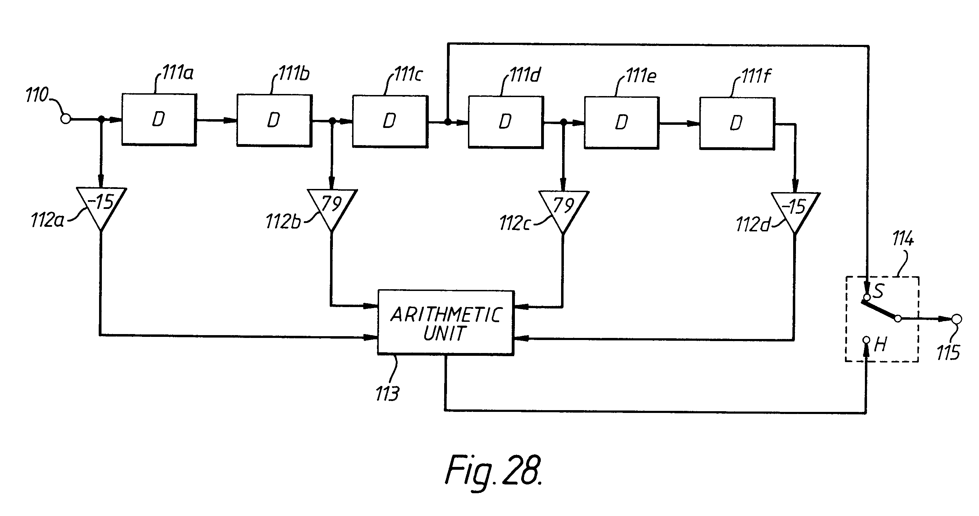

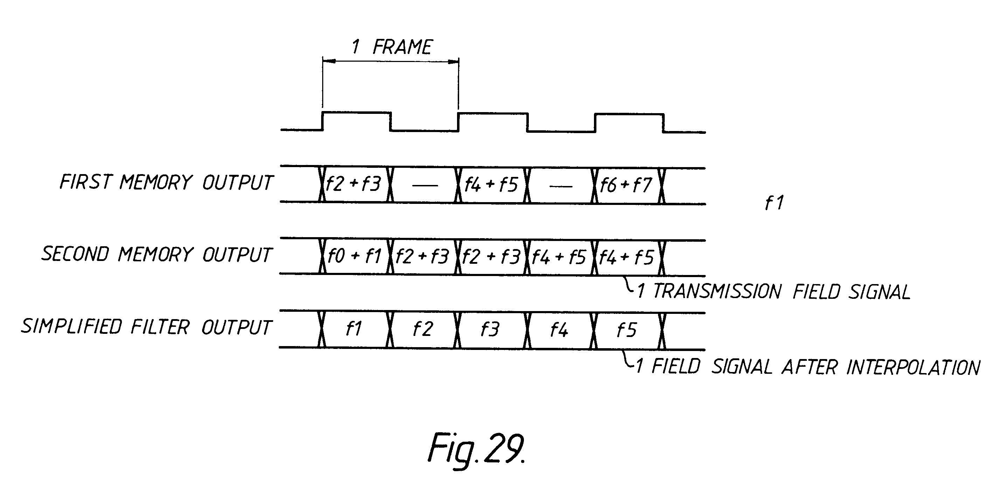

Fig. 27 is a block diagram of an embodiment of a decoding apparatus of the invention, Fig. 28 is a block diagram of an interpolation filter, Fig. 29 is a timing diagram for explaining the operation of the interpolation filter, and Fig. 30 is an explanatory diagram of recording band of a conventional sub-sample coding apparatus.

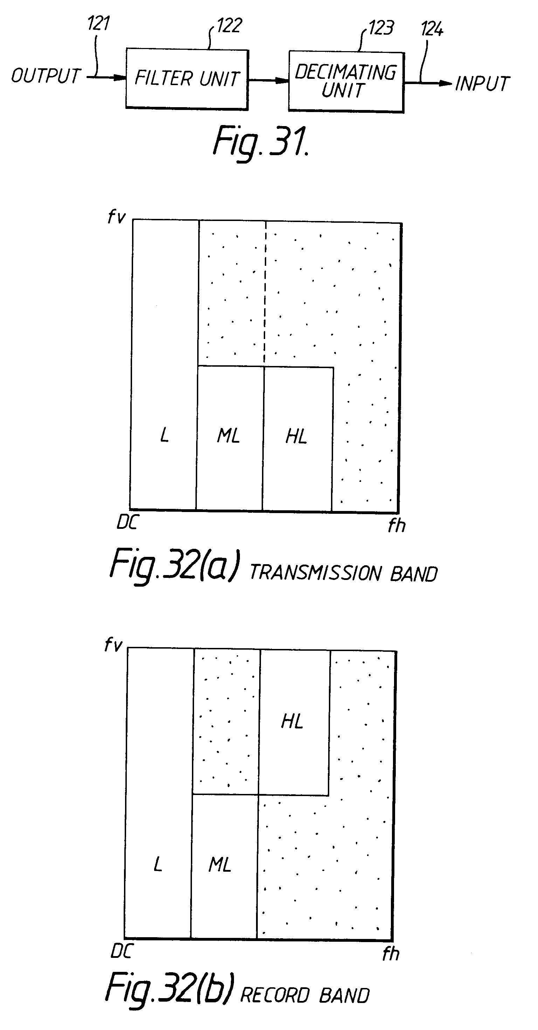

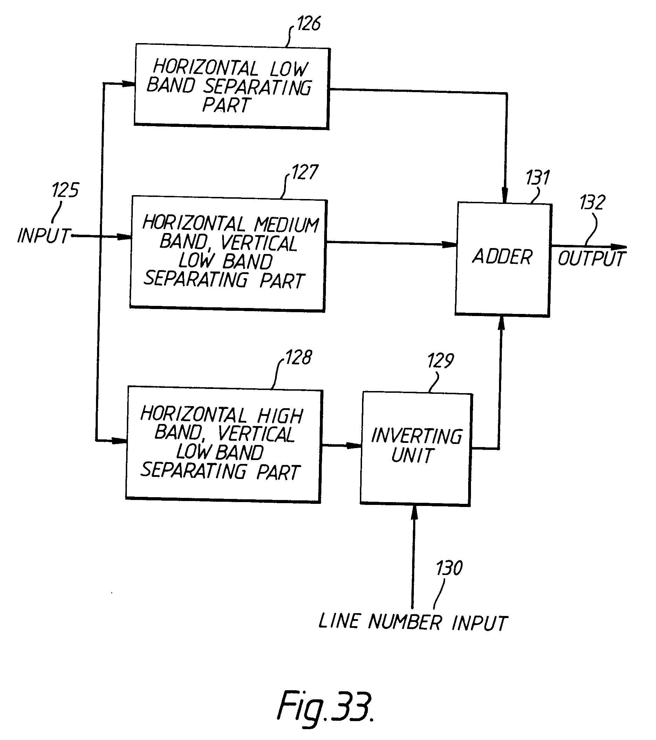

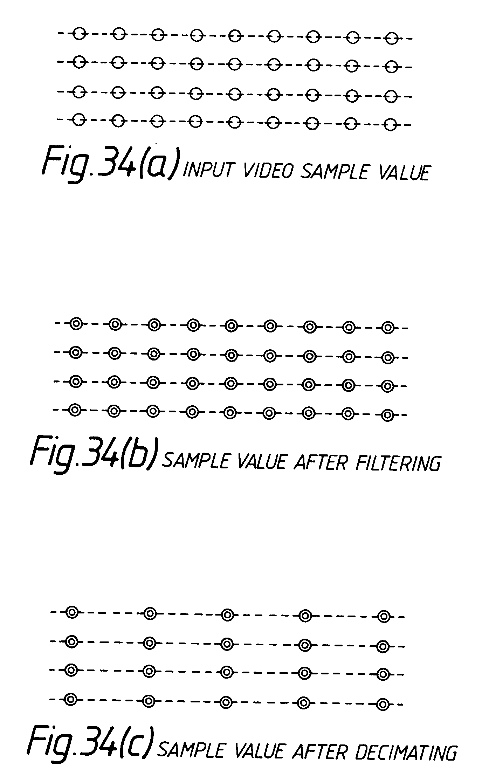

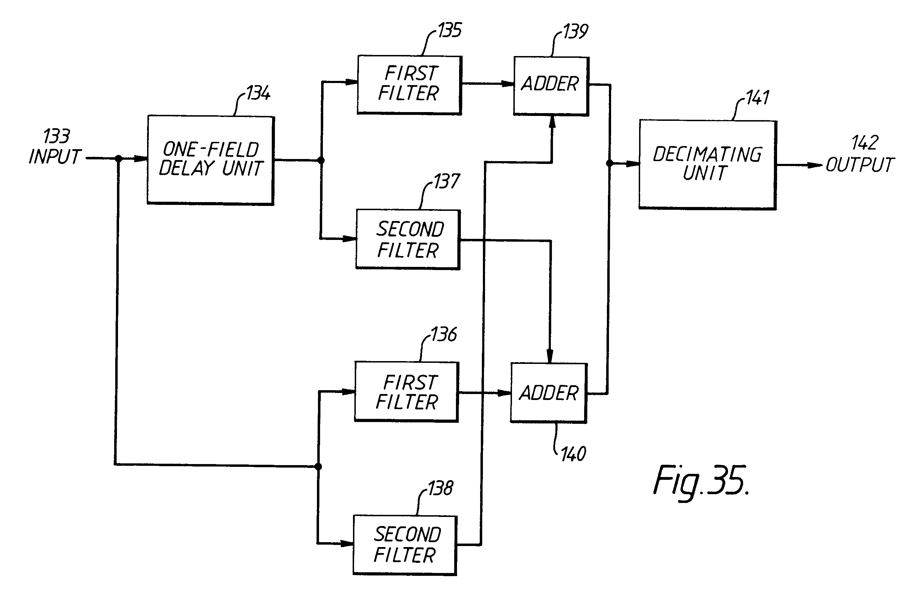

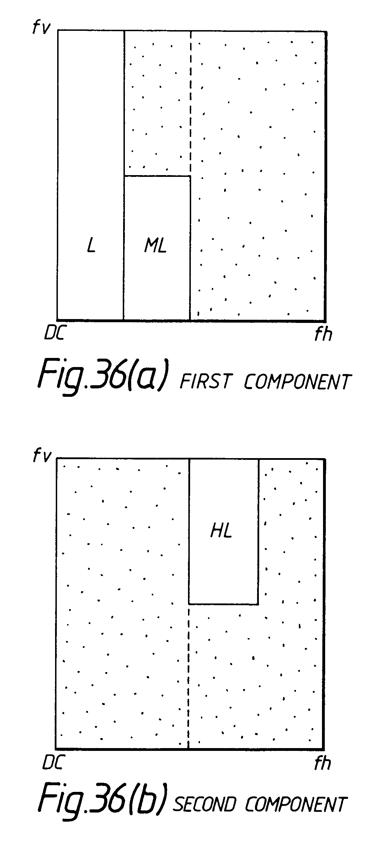

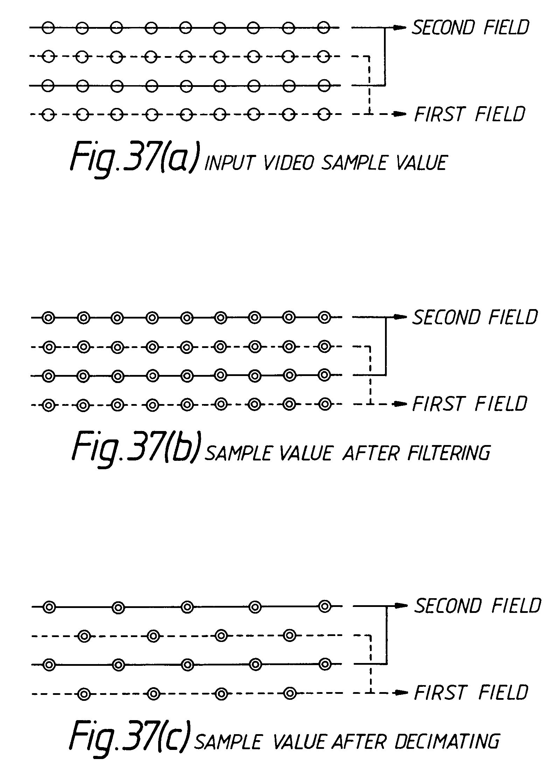

Fig. 31 and Fig. 35 are block diagrams of different embodiments of the high efficiency coding apparatus of the invention, Fig. 32 is an explanatory diagram of transmission band and recording band, Fig. 33 is a block diagram of an embodiment of filter unit of sub-sample coding apparatus, Fig. 34 is an explanatory diagram of transmission sample, Fig. 36 is an explanatory diagram of recording band, Fig. 37 is an explanatory diagram of transmission sample, and Fig. 38 is an explanatory diagram of transmission sample of conventional sub-sample coding.

### DESCRIPTION OF THE PREFERRED EMBODIMENTS

Fig. 1 is a block diagram of a first embodiment of the invention. In the diagram, numeral 1 denotes an input unit, 2 is a decimating filter unit, 3 is a block forming unit, 4 is an orthogonal transformation unit, 5 is a coding unit, and 6 is an output unit.

The operation of this embodiment is explained below. Sample values of video signals entered through the input unit 1 in Fig. 1 are filtered by the decimating filter unit 2 so as to remove effects of aliasing distortion, and are decimated in every other sample. Here, the sample value left over in the decimating filter unit 2 is called the transmission sample value. This transmission sample value is divided into basic blocks to be subjected to orthogonal transformation in the block forming unit 3. The transmission sample points divided into blocks in the block forming unit 3 are orthogonally transformed in the orthogonal transformation unit 4. Generally, the discrete cosine transformation (DCT) is employed. The transmission sample points orthogonally transformed by the orthogonal transformation unit 4 are coded in the coding unit so as to be suited to transmission or recording, and are issued to the output unit 6. As the coding method, the variable length coding is often employed in order to enhance the compression efficiency.

Fig. 2 is an explanatory diagram of an example of transmission sample values obtained in the decimating filter unit 2 in Fig. 1. Sample values of four lines in a certain field are shown in Fig. 2, in which the broken line indicates the horizontal line of the interlaced next field. The circle in Fig. 2 indicates transmission sample value left over in the decimating filter in the embodiment, and the black spot denotes the position of the sample point to be decimated. In this example, within the same field, the sample value of the same position is selected between lines in the transmission sample. Besides, a filter for removing the aliasing distortion is used before decimating the sample value.

Fig. 3 is an explanatory diagram of an example of the block forming unit 3 shown in Fig. 1. The circle mark in Fig. 3 indicates a transmission sample value of a first field, the triangle mark shows a transmission sample point of a second field, and the square mark is a transmission sample point of a fourth field. In this example, one block is composed of a total of 64 transmission sample values in four fields. Moreover, in order that the positions of transmission sample values of each field on the screen may be located at different positions individually, the transmission sample points are selected in the decimating filter unit 1 in Fig. 1. By thus forming in blocks, in the invention, a block in the same number of sample values as 64 sample points in two fields without decimating filter in the prior art can be composed in four fields. That is, the data of four fields can be transmitted by the number of blocks for transmitting the data of two fields in the prior art. Therefore, the compression rate may be easily doubled by employing the invention. What is more, since the size of the block on the screen is same as in the conventional method, deterioration of picture quality due to heightening of the compression rate may be limited to a minimum extent. Moreover, since the orthogonal transformation unit and coding unit of the invention may be same as those used in the prior art without using the decimating filter, the compression rate may be doubled without increase of large circuit scale.

Fig. 4 is a block diagram of a second embodiment. In Fig. 4, numeral 7 is an input unit, 8 is a decimating filter unit, 9 is a block forming unit, 10 is a motion detecting unit, 11 is an adaptive orthogonal transformation unit, 12 is a coding unit, 13 is a motion information coding unit, and 14 is an output unit.

The operation of this embodiment is explained below. Sample values of video signals entered through the input unit 7 shown in fig. 4 are filtered in the decimating filter unit 8, same as in the first embodiment, to remove effects of aliasing distortion, and converted to transmission sample values. In the block forming unit 9, transmission sample values of plural fields obtained in the decimating filter unit 8 are divided into basic blocks subjected to orthogonal transformation. In the motion detecting unit 10, using the transmission sample values formed into blocks by the block forming unit 9, it is judged whether the block has a large motion (moving picture block) or a small motion (still picture block). As a practical method of judgement, for example, a moving picture block is judged when the difference is large between different fields at adjacent positions on the screen within block. In the adaptive orthogonal transformation unit 11, in the block judged to be a moving picture block by the motion detecting unit 10, first the transmission sample values in each field are orthogonally transformed, and the results are further transformed between fields. On the other hand, in the block judged to be a still picture block, the transmission sample values in the block disposed as shown in Fig. 3 are orthogonally transformed two-dimensionally as still picture. The transmission sample values orthogonally transformed in the adaptive orthogonal transformation unit 11 are coded in the coding unit 12, and sent out to the output unit 14. At the same time, in the motion detecting unit 13, the information showing whether the motion detecting unit 10 has judged the block to be a moving picture block or a still picture block is coded, and sent to the output unit 14. Usually this information is coded in 1 bit in every block.

Fig.5 is a block diagram of an example of the adaptive orthogonal transformation unit 11 in the embodiment shown in Fig. 4. In Fig. 5, numeral 15 is a sample value input unit, 16 is a motion information input unit, 17 is a three-dimensional orthogonal transformation unit, 18 is a two-dimensional orthogonal transformation unit, 19 is a switch, and 20 is an orthogonal transformation output unit. The transmission sample value of each block entered from the sample value input unit 15 is fed into the three-dimensional orthogonal transformation unit 17 and two-dimensional orthogonal transformation unit 18. In the three-dimensional orthogonal transformation unit 17, the transmission sample value orthogonally transformed in each field is first orthogonally transformed between fields in every orthogonal component. In this way, three-dimensional orthogonal transformation is executed. In the two-dimensional orthogonal transformation unit 18, a block composed of plural fields is regarded as a still picture, and two-dimensional orthogonal transformation is executed. In the switch 19, according to the information entered from the motion information input unit 16, the output signal of the three-dimensional orthogonal transformation unit 17 is sent to the orthogonal transformation output unit 20 in the case of a moving picture block, or to the two-dimensional orthogonal transformation unit 18 in the case of a still picture block. As another method of realizing the adaptive orthogonal transformation, the three-dimensional orthogonal transformation and two-dimensional orthogonal transformation may be changed over by controlling the operation method of one orthogonal transformation device.

Another example of operation of the adaptive orthogonal transformation unit 11 is shown below. First is shown a case of the decimating filter unit 8 calculating the transmission sample value by using the sample values of the upper and lower lines adjacent in the same field by the sub-sample filter in field as shown in Fig. 6 (a). In Fig. 6 (a), the position indicated by double circle represents the position of t he sample value to be transmitted. The value of the sample point to be transmitted is the result of dividing the sum of the products of the coefficients shown on the circle and double circle multiplied by the sample value of the position by 128. By decimating the transmission sample points by using this filter, the aliasing distortion in reproduction may be reduced.

Fig. 7 (a), (b), (c), (d) indicate sample point positions of signals supplied from the decimating filter unit 8. in the block forming unit 9, transmission sample values of consecutive two fields of field 4n and field (4n+1) are alternately disposed, and similarly field (4n+2) and field (4n+3) are alternately disposed, thereby creating video signals of two transmission fields. Furthermore, in the block forming unit 9, transmission sample values of consecutive fields of field 4n and field (4n+1) are alternately transmitted in even-number rows, while transmission sample values of consecutive fields of field (4n+2) and field (4n+3) are alternately transmitted in odd-number rows, thereby forming blocks as shown in Fig. 8 (a).

Next is a case of using, in the decimating filter unit 8, a sub-sample filter between fields for determining the transmission sample values by using the sample values of consecutive fields as shown in Fig. 6 (b), or using a sub-sample filter in line for determining the transmission sample values by using the sample values in one line as shown in Fig. 6 (c). In this case, the positions of transmission sample points are not offset on each line within the same field as shown in Fig. 9 (a), (b), (c), (d). In this case, too, in the block forming unit 9, transmission sample values of consecutive fields of field 4n and field (4n+1) are alternately transmitted in even-number rows, while transmission sample values of consecutive fields of field (4n+2) and field (4n+3) are alternately transmitted in odd-number rows, thereby forming blocks as shown in Fig. 8 (a).

The blocks formed in the block forming unit 4 are judged to be still picture block or moving picture block by the motion detecting unit 10, and are supplied into the adaptive orthogonal transformation unit 11. The motion detecting unit 5 calculates the sum of the differences of transmission sample values among even- and odd-number rows in the orthogonal transform blocks (|Aₘₙ-Cₘₙ| and |Bₘₙ-Dₘₙ|, 0 ≦ m, n ≦ 7), and it is judged to be a moving picture block if the result is 600 or more, and a still picture block if less than 600. The result of this judgement is sent to the switch 19 in Fig. 5.

The two-dimensional orthogonal transformation unit 18 exchanges the input block rows in the sequence as shown in Fig. 8 (b), and operates each row by eighth-degree orthogonal transformation. Furthermore, in the horizontal orthogonal transformation operation results (see Fig. 8 (c)), the sum and difference are calculated in the vertical direction, and this operation result is calculated in each line by eighth-degree orthogonal transformation. The signals after two-dimensional orthogonal transformation operation are sent out to the switch 19 according to the zigzag scan sequence shown in Fig. 10 (a).

In the still picture, transmission sample values of consecutive two frames are nearly equal. Accordingly, by operating the orthogonal transformation in the vertical direction by the sum and difference components between frames, and scanning from the sum components, it is possible to send out from the orthogonal transform coefficient of the greater energy. In the sub-sample filter, the transmission sample points are offset in the consecutive fields. In the two-dimensional orthogonal transformation unit 18, the consecutive transmission sample values are alternately arranged, and horizontal orthogonal transformation is calculated. As a result, the distance between pixels is shorter than in the prior art, and the efficiency of orthogonal transformation is improved.

In the three-dimensional orthogonal transformation unit 17, the input blocks are separated into blocks of 4 x 4 pixels in field unit, and the sum and difference of sample values of adjacent blocks are calculated as shown in Fig. 11 (b), and fourth-degree orthogonal transformation is calculated in every row of each block. Furthermore, the sum and difference are calculated in upper and lower blocks of the output of the horizontal orthogonal transformation calculation (see Fig. 11 (c)), and in every line of each block of this calculation result (see Fig. 11 9d)), fourth-degree orthogonal transformation is calculated. The signals thus processed by orthogonal transformation are sent out to the switch 19 according to the zigzag scan sequence shown in Fig. 10 (b).

In the moving picture, the correlation is less in the transmission sample values among consecutive four fields. Hence, in both horizontal and vertical directions, it is efficient to operate the orthogonal transformation in the field unit. Besides, between blocks of different fields (4 x 4 pixels), the sum and difference ar calculated in the horizontal direction and vertical direction, and this calculation result is operated by orthogonal transformation, so that the energy concentration in the low frequency region may be improved.

The switch 19 is changed over according to the motion information supplied from the motion detecting unit 10. The switch 19 supplies the output signal of the two-dimensional orthogonal transformation unit 18 to the output unit 20 when the motion detecting unit 10 judges the input block to be a still picture block, and supplies the output signal of the three-dimensional orthogonal transformation unit 17 when judged as a moving picture block.

In this embodiment, orthogonal transformation suited individually to the block with a large motion and the block with a small motion is applied. Thus, by handling plural fields as one block, the image quality deterioration of moving picture may be minimized.

Fig. 12 is a block diagram of a third embodiment. In Fig. 12, numeral 21 is an input unit, 22 is a motion detecting unit, 23 is a sub-sample filter in field, 24 is a sub-sample filter between fields, 25 is a switch, 26 is a block forming unit, 27 is an orthogonal transformation unit, 28 is a coding unit, 29 is a motion information coding unit, and 30 is an output unit.

The operation is described below. In Fig. 12, the sample value of the video signal entered from the input unit 21 is judged whether the motion is large or small in every specified range by the motion detecting unit 22. In the sub-sample filter in field 23, using only the sample values in the fields, a filter for removing the aliasing distortion is composed, and the transmission sample value is sent out. In the sub-sample filter between fields 24, using the sample values extending over plural fields, a filter for removing the aliasing distortion is composed, and the transmission sample value is sent out. A simple example of the sample filter between fields 24 is a low pass filter for compressing the passing band to 1/2 by a filter in one line. A simple example of the sub-sample filter between fields is a filter for limiting the passing band in the time axis direction between two lines in frames located at the same position on the screen. In the switch 25, for the sample value in the range judged to be large in motion by the motion detecting unit 22, the transmission sample value produced from the sub-sample filter in field 23 is selected, and for the sample value in the range judged to be small in motion, the transmission sample value produced from the sub-sample filter between fields 24 is selected, and sent out to the block forming unit 26. Accordingly, in the image with small motion, a wide band can be transmitted by the sub-sample filter between fields, while in the image with large motion, on the other hand, a spontaneous motion can be reproduced by the sub-sample filter in field. In the block forming unit 26, the input transmission sample value is divided into blocks, and fed into the orthogonal transformation unit 27, and orthogonally transformed in each block. The transmission sample value orthogonally transformed in the orthogonal transformation unit 27 is coded in the coding unit 28, and delivered to the output unit 30. At the same time, in the motion information coding unit 29, the information of judging each block whether as moving picture block or as still picture block by the motion detecting unit 22 is coded, and issued to the output unit 30.

An example of configuration of transmission sample points of this embodiment is shown in Fig. 13. Fig. 13 shows the configuration of the transmission sample values in a certain field same as in Fig. 2. In the configuration in Fig. 13, the sample value positions differ between adjacent lines in the field. By such configuration, deterioration of horizontal resolution may be decreased if the sample values are decimated by the sub-sample filter in field. Fig. 14 shows an example of block forming corresponding to the transmission sample values in Fig. 13. As the specified range for judging the motion described above, by selecting a range equal to the range formed as a block by the block forming unit 26, the number of blocks and the number of code words of motion information may be equalized. Moreover, the motion information may not be transmitted by estimating from the information between fields of the transmission sample values.

In this embodiment, by adaptively changing over the decimating filter depending on the size of the motion of the image, compression suited to both moving picture and still picture may be enabled.

Fig. 15 is a block diagram of a fourth embodiment. In Fig. 15, numeral 31 is an input unit, 32 is a motion detecting unit, 33 is a sub-sample filter in field, 34 is a sub-sample filter between fields, 35 is a switch, 36 is a block forming unit, 37 is an adaptive orthogonal transformation unit, 38 is a coding unit, 39 is a motion information coding unit, and 40 is an output unit.

The operation of this embodiment is described below. In Fig. 15, the sample value of the video signal entered from the input unit 31 is judged whether the motion is large or small in every specified range by the motion detecting unit 32. In the sub-sample filter in field 33, using only the sample values in the fields, a filter for removing the aliasing distortion is composed, and the transmission sample value is sent out. In the sub-sample filter between fields 34, using the sample values extending over plural fields, a filter for removing the aliasing distortion is composed, and the transmission sample value is sent out. In the switch 35, for the sample value in the range judged to be large in motion by the motion detecting unit 32, the transmission sample value produced from the sub-sample filter in field 33 is selected, and for the sample value in the range judged to be small in motion, the transmission sample value produced from the sub-sample filter between fields 34 is selected, and sent out to the block forming unit 36. Accordingly, in the image with small motion, a wide band can be transmitted by the sub-sample filter between fields, while in the image with large motion, on the other hand, a spontaneous motion can be reproduced by the sub-sample filter in field. In the block forming unit 36, the input transmission sample value is divided into blocks, and fed into the adaptive orthogonal transformation unit 37. In the adaptive orthogonal transformation unit 37, as shown in Fig. 5, the transmission sample values formed in blocks according to the motion information obtained from the motion detecting unit 32 are adaptively transformed orthogonally. The transmission sample value orthogonally transformed in the adaptive orthogonal transformation unit 37 is coded in the coding unit 38, and delivered to the output unit 40. At the same time, in the motion information coding unit 39, the information of judging each block whether as moving picture block or as still picture block by the motion detecting unit 32 is coded, and issued to the output unit 40.

In this embodiment, by changing over the decimating filter adaptively depending on the size of the motion of the image, the decimating filter suited to both moving picture and still picture is realized. In addition, the orthogonal transformation may be selected so as to be suited to either moving picture or still picture, so that optimum compression is possible regardless of the input images.

Fig. 16 is a block diagram of a fifth embodiment. In Fig. 16, numeral 41 is an input unit of the embodiment, 42 is a sample value decimating unit, 43 is a transmission field composing unit, 44 is a first orthogonal transform block forming unit, 45 is a second orthogonal transform block forming unit, 46 is a switch, 47 is a compression rate input unit, 48 is an orthogonal transform coding unit, and 49 is an output unit.

The sample value entered from the input unit 41 is fed into the sample value decimating unit 42 and second orthogonal transform block forming unit 45.

First is explained the processing of sample value supplied in the sample value decimating unit 42. Fig. 17 is a block diagram of an example of the sample value decimating unit 42. In Fig. 17, numeral 50 is an input unit of sample value decimating unit, 51 is a field memory unit, 52 is a filter unit between fields, 53 is a decimating unit, and 54 is an output unit. The input sample value entered from the input unit 50 is fed into the field memory unit 51 and the filter unit between fields 52. In the field memory unit 51, the input sample value is delayed by one field, and is sent out to the filter unit between fields 52. In the filter unit between fields 52, using the input sample value of the present time entered from the input unit 50 and the input sample value one field before entered from the field memory unit 51, a filter between fields is composed. The sample values filtered by the filter unit between fields 52 are decimated in every other field in the decimating unit 53, and sent out to the output unit 54. By using the sub-sample filter unit between fields 52, oblique high frequency components between fields can be removed, so that the aliasing distortion in reproduction may be decreased.

Fig. 18 is an explanatory diagram of an example of transmission field composing unit 43 in Fig. 16. Fig. 18 (a) shows a part of the transmission sample values of four lines contained in the 2n-th input field and the 2n+1-th input field. The white circle in Fig. 18 denotes the position of the transmission sample value, and the individual transmission sample values are distinguished by alphabetical letters a to p. The black spot indicates the position of the sample value decimated by the sample value decimating means. As shown in Fig. 18 (a), in this embodiment, the position of the sample value to be decimated is deviated by one sample value each between the 2n-th input field and the 2n+1-th input field.

Fig. 18 (b) expresses the n-th transmission field composed by the transmission field composing unit 43 in Fig. 16. The n-th transmission field is composed of transmission sample values of two fields, the 2n-th and 2n+1-th. The white circles in Fig. 18 (b) denote the same transmission sample values as the transmission sample values a to p in Fig. 18 (a). As shown in this diagram, each line of the n-th transmission field is composed by arraying the transmission sample values of two adjacent lines of the 2n-th field and 2n+1-th field sequentially in every sample value.

When one input field of the invention is composed of sample values of horizontal 2H and vertical V lines, it is converted into horizontal H transmission sample values by sample value decimation. Next, by composing the transmission fields as shown in Fig. 18 (b), one transmission field is composed of sample values of horizontal 2H and vertical V lines. As a result, the input fields and transmission fields are composed exactly in the same sample value composition. Besides, since two input fields are converted into one transmission field, the input in the stage of transmission field is compressed to 1/2.

Fig. 19 is an explanatory diagram of an example of orthogonal transform block unit 44 in Fig. 16. In this embodiment, one orthogonal transform block is composed of a total of 64 transmission sample values in 8 lines and 8 transmission sample values in the horizontal direction in two consecutive transmission fields. As shown in Fig. 18, in this embodiment, the distance between the transmission sample values in the orthogonal transmission block is same as the distance between input sample values. Therefore, in the invention, in spite of decimation of sample values, the distance between sample values is not changed, and the size of the orthogonal transform block is hardly increased. Hence, deterioration coding efficiency in orthogonal transform coding hardly occurs, and it is possible to increase the compression rate twice as high by sample value decimation.

Next is explained the processing of sample values supplied in the second orthogonal transform block forming unit 45. Fig. 20 shows an orthogonal transform block composed by the second orthogonal transform block forming unit 45. The orthogonal transform block in Fig. 20 is composed of a total of 64 sample values in 8 lines and 8 sample values in the horizontal direction in consecutive two input fields. This is same as the composition of the first orthogonal transform block for the transmission sample values shown in Fig. 19. Therefore, the orthogonal transform blocks produced from the first orthogonal transform block forming unit 44 and from the second orthogonal transform block forming unit 45 are identical in the number of blocks per field, the size of block, and the number of sample values in block.

The switch 46 selects, depending on the information entered from the compression rate input unit 47, the output of the first orthogonal transform block forming unit 44 when a high compression rate is required, and selects the output of the second orthogonal transform block forming unit 45 when enough at a low compression rate. The orthogonal transform block selected by the switch 46 is orthogonally transformed by the orthogonal transform coding unit 48, coded, and issued to the output unit 49.

In this embodiment, the compression rate may be changed exactly two times, between the case of orthogonal transform coding of the transmission sample values obtained by sample value decimation and the case of direct orthogonal transform coding of the input sample values. In the invention, moreover, whichever orthogonal transform block forming is selected, since the number of blocks per field, size of block and number of sample values in block are the same, exactly identical orthogonal transform coding may be performed. Accordingly, two compression rates may be selected without increasing the circuit scale so much. In the invention, moreover, the first orthogonal transform block forming unit 44 and the second orthogonal transform block forming unit 45 may be shared.

Fig. 21 is a block diagram of recording apparatus and reproducing apparatus for high efficiency coding in a sixth embodiment. Fig. 22 is an explanatory diagram of sample values to be transmitted, and Fig. 23 is a structural diagram of filter. Fig. 24 is a timing chart of signals recorded and reproduced in Fig. 21, and Fig. 25 is a track diagram of tape. Fig. 26 is a diagram showing the format style of six blocks (one sync block).

In Fig. 21, numeral 60 is an input terminal for receiving a digitized video signal, 61 is a first shuffling unit for forming input video signals in the input terminal 60 (Y signal, R-Y signal, B-Y signal) in blocks in the unit of 8 x 8 pixels each, and 62 is a pre-coding unit for curtailing the number of pixels to 1/2, being composed of a decimating filter 63 of sub-Nyquist filter in field and a transmission field composing unit 64. Numeral 65 is a second shuffling unit for forming the signals supplied through the pre-coding unit 62 (Y signal, R-Y signal, and B-Y signal) in blocks in the unit of 8 x 8 pixels each. A first switch 66 is changed over to the S side in standard mode and L side in the long playing mode, depending on the control signal supplied to a second input terminal 67. Numeral 68 is an orthogonal transformation unit for processing the output signal of the first switch 66 by two-dimensional orthogonal transformation, 69 is a compressor for compressing the signal supplied from the orthogonal transformation unit 68 by quantizing and variable length coding so as to bed less than predetermined data quantity, and 70 is a formatter for formatting the compressed video signal into a specified format and then adding a correction code and control signal to this signal, and the output signal of the formatter 70 is supplied into magnetic head group 74A, 74B, or magnetic head group 74A, 74C mounted on a cylinder 73 through a second switch 71 changed over to the R side and a rotary transformer 72. Numeral 75 is a magnetic tape, 76a, 76b are guide posts, and 77 is a drive mechanism responsible for rotation of the cylinder 73 and running of magnetic tape.

Numeral 78 is a deformatter for receiving the signal supplied through the second switch 71 being reproduced by the magnetic head group 74A, 74B, 74C, and changed over to the rotary transformer 72 and P side, and the video signal of which error has been corrected by the deformatter 78 is recomposed in the block unit, and sent out to an expander 79. At the same time, the deformatter 78 separates the control signal showing the recording mode, and supplied to a third switch 80. Numeral 81 is an inverse orthogonal transformation unit, which performs two-dimensional inverse orthogonal transformation on signals in block unit decoded and inversely quantized from variable length codes by the expander 79. The output signal of the inverse orthogonal transformation unit 81 is supplied in first and second deshuffling units 82, 83, and recomposed into signals in field unit. Numeral 84 is a field separator, and 85 is an interpolation filter. The third switch 80 sends the output signal of the first deshuffling unit 82 or interpolation filter 85 to an output terminal 86 according to the control signal supplied from the deformatter 78.

In thus composed high efficiency coding apparatus in the embodiment, the general recording operation and reproducing operation are described below.

First, the recording operation is described below. The digital video signal entered in the input terminal 60 (one field composed of Y signal 720 x 480 pixels, color difference signals R-Y and B-Y signals of 180 x 480 pixels each) is entered in the first shuffling unit 61, and formed into blocks of Y signal, R-Y signal, and B-Y signal, in the unit of 8 x 8 pixels. The signals formed in blocks are supplied in the first switch 66. At the same time, the digital video signal entered in the input terminal 60 is supplied into the pre-coding unit 62, and signals of one field for transmission are generated from signals of two consecutive fields. The decimating filter 63 decimates the sample values in every other sample value as shown in Fig. 22 a, b. When decimating, the even-number fields and odd-number fields are decimated by offset. The transmission field composing unit 24 alternately overlaps the sample values of two fields of consecutive even and odd numbers, and generates signals of one transmission field (Y signal of 720 x 480 pixels, R-Y and B-Y signals of 180 x 480 pixels). Fig. 23 a shows the composition of the sub-sample filter in field used as decimating filter. The sub-sample filter in field operates by using the sample values of the upper and lower lines adjacent within a same field. The position indicated by double circle in Fig. 23 a shows the position of the sample value to be transmitted. The value of the sample value to be transmitted is the result of dividing the sum of the results of multiplication of the coefficients indicated in the circle and double circle by the sample value at the position by 128. Hence, the aliasing distortion in reproduction may be decreased.

The signal in the field unit issued from the pre-coder 62 (the signal of a newly generated transmission field) is supplied to the second shuffling unit 65, and is formed in a block in the unit of 8 x 8 pixels each in every Y signal, R-Y signal, and B-Y signal. A control signal showing the recording mode is supplied in the second input terminal 67. When the control signal indicates the standard mode, the first switch 66 is changed over to the S side, and the output signal of the first shuffling unit 61 is supplied to the orthogonal transformation unit 61. and when indicating the long playing mode, the output signal of the second shuffling unit 65 is supplied. The orthogonal transformation unit 68 orthogonally transforms the input signal two-dimensionally, and supplies to the compressor 69.

In the long-playing mode, as shown in Fig. 22 c, the block signals to be orthogonally transformed are distributed alternately in the sample values of even- and odd-number fields. Therefore, the compression efficiency may be notably improved in this method of orthogonal transformation by inserting similar signals as compared with the prior art of extending the distance between pixels by decimating the decimating filter pixels. Besides, unlike the prior art, the number of blocks to be compressed is same in the standard mode and the long playing mode, so that the picture quality deterioration may be reduced. In the aspect of the circuit, too, between the standard mode and long playing mode, the number of pixels in the field unit to be supplied in the shuffling units 61, 65 is identical, and therefore it is not necessary to modify the circuit composition of the orthogonal transformation unit 68, compressor 69, and formatter 70.

The compressor 69 processes a total of 30 blocks of 20 blocks of Y signal, 5 blocks of R-Y signal, and 5 blocks of B-Y signal produced from the orthogonal transformation unit 28 as one unit. The compressor 29 compresses so that the cumulative number of code words after quantizing and variable length coding may be less than the predetermined target value. The output signal of the compressor 69 is supplied in the formatter 70 and formatted. Fig. 26 shows the format style of the portion of six blocks (one sync block). When formatting 30 blocks, five sync blocks are used. A region of 12 bytes is prepared for Y signal, and a region of 6 bytes for the color difference signal of R-Y or B-Y signals. The signals in block unit issued from the compressor 69 are packed without gap into the region assigned from the components of low frequency. The signals overflowing from the region are written into a free space in the HAC region, Y signal, R-Y signal, and B-Y signal. When formatting is over, error correction code and control signal showing recording mode, and others are added.

The output signal of the formatter 70 is added, in standard mode, to a second switch 71 changed over to the R side, and the magnetic head group 74A (azimuth +20 degrees), 74B (azimuth -20 degrees) mounted on a cylinder 73 through a rotary transformer 72. In the long playing mode, it is supplied to the magnetic head group 74A, 74C (azimuth -20 degrees). In the cylinder 73, a magnetic tape 75 is obliquely wound by guide posts 76a, 76b, and is controlled by a control device 77, and runs in the direction of arrow M shown in Fig. 21. The control device 77 controls the running speed of the magnetic tape 75 at 1/2 in the long plying mode depending on the control signal. At this time, the cylinder 73 is controlled by the control device 77, and rotates in the direction of arrow N. In this way, signals are recorded in the magnetic tape 75. The signal recording timing is shown in Fig. 24, and the tracks formed in the magnetic tape 75 in Fig. 25. In the standard mode, tracks are formed in the sequence of a, b, c, d, I continuously in the magnetic tape 75 by the magnetic head group 74A, 74B. In the long playing mode, tracks a, b, c, d, I are sequentially recorded in the magnetic tape 75 intermittently by the adjacent magnetic head group 74A, 74C. Here, since the tracks formed by the magnetic head group 74A,74B, 74C are recorded while being partly overwritten, the width is narrower than that of the magnetic head group 74A, 74B, 74C. In one track, signals of 135 single blocks (540 blocks of Y signal, 135 blocks of R-Y signal, and 135 blocks of B-Y signal) are recorded, and in the standard mode, therefore, the video signals of one frame are recorded in 10 tracks, while in the long playing mode, on the other hand, video signals of one frame are recorded in 5 tracks.

The ordinary reproduction operation is described below. The recorded signal is reproduced by the magnetic head group 74A, 74B, 74C possessing the same azimuth as in recording at the same time as in recording. The signals recorded in the standard mode are reproduced by the magnetic head group 74A, 74B, and are added to the deformatter 78 through the rotary transformer 72 and second switch 71 changed over to the P side. Similarly, the signals recorded in the long playing mode are reproduced by the magnetic head group 74A, 74C. The deformatter 78 detects and corrects the error occurring during transmission by using the error correction code added to the compressed video signal, and issues to an expander 79. At the same time, the control signal is separated, and supplied into a third switch 80. The expander 79 detects and decodes the variable length code word from the input signals, and expands by inversely quantizing. The expanded signal is issued to the inverse orthogonal transformation unit 81. The inverse orthogonal transformation unit 81 processes the input signal by inverse orthogonal transformation, and sends out to first and second deshuffling units 82, 83. The first deshuffling unit 82 generates Y signal, R-Y signal, B-Y signal in field unit from the input signals, and sends out to the third switch 80. A field separator 84 separates the transmission field into initial two fields, and sequentially sends out to an interpolation filter 84 in each field. An example of interpolation filter is shown in Fig. 23 (b). The composition is same as the decimating filter used in recording, and sample values of three lines are used. A different point is that the position indicated by x mark is the position of the sample point for interpolation, and the sample value to be interpolated is obtained by dividing the sum of the multiplication results of the sample points and the coefficient by 64. The output signal of the interpolation filter 85 is supplied to the third switch 80. The third switch 80 is changed over according to the control signal. When the recorded signal is of long playing mode, the output signal of the interpolation filter is supplied to an output terminal 86, while the output signal of the first deshuffling unit 82 is supplied in the case of standard mode.

Explained below is the operation in the case of using a simplified reproducing apparatus of the invention. Fig. 27 is a block diagram of a reproducing apparatus for simplified reproducing process in the invention. Fig. 28 is a structural diagram of an interpolation filter, and Fig. 29 is a timing chart for explaining the operation of the interpolation filter.

In Fig. 27, numeral 90 is an input terminal for receiving compressed video signals in the long playing mode reproduced from the magnetic head, and 91 is a deformatter composed of an error correction unit 92 and a first memory 93, and the video signal corrected of error by the deformatter 91 is recomposed in the block unit, and issued to an expander 94. The deformatter 91 simultaneously sends out the control signal indicating the recording mode to an interpolation filter 95. Numeral 96 is an inverse orthogonal transformation unit, and the signal of the variable length code decoded and inversely quantized by the expander 94 is processed by two-dimensional inverse orthogonal transformation. Numeral 97 denotes a deshuffling unit composed of a field generator 98 and a second memory 99, and the deshuffling unit 97 reconstructs the input signal into a signal in the transmission field unit, and sends out to the interpolation filter 95. The interpolation filter 95 interpolates the sample values in every other pixel, and sends out the signals to an output terminal 100.

In Fig. 28, numeral 110 is an input terminal for receiving a transmission field signal, 111 a through f are D flip-flops (hereinafter abbreviated as D-FF) for delaying the video signal by one sample value time, 112 a through d are multipliers for multiplying the coefficients in the diagram, 113 is a arithmetic unit for dividing the sum of input signals of four lines by 128, and 114 is a switch, and the output signal of the switch 114 is supplied to an output terminal 115.

In thus composed simplified reproducing apparatus, the operation is described below.

As shown in the ordinary example of recording and reproducing, the signals compressed in the long playing mode are supplied intermittently to the head, and are recorded in the magnetic tape. This is to describe the means of easily reproducing this magnetic tape in a appliance without function of long playing mode. By reproducing the track recorded in the magnetic tape by using the 1/2 speed slow reproducing function (the function of reproducing at a speed of 1/2 of the tape feed speed in standard mode), the signal data rate reproduced in the ordinary head composition (installed in the configuration of 180 degrees to the cylinder). For example, when reproducing the track shown in Fig. 25 by using the magnetic head group 74A, 74B in Fig. 21, after the magnetic head 74A reproduces track a, the magnetic head 74B reproduces by extending over tracks a and b. Since track a and magnetic head 74B differ in the azimuth angle between recording mode and reproducing mode, the signal of track b is reproduced. Next, the magnetic head 74A reproduces the track b, but cannot reproduce the recorded signal because the azimuth angle differs between recording mode and reproducing mode. In this way, the signal recorded in the long playing mode is reproduced at the same tape speed as when recorded in the long playing mode.

The reproduced signal supplied in the input terminal 90 in Fig. 27 is added to the deformatter 91. The deformatter 91 writes the input signal into the first memory 93, and detects and corrects an error occurring during transmission by using the error correction code added to the compressed video signal. In the first memory 93, as shown in Fig. 29, signals of the portion of one transmission field (worth of five tracks) compressed two times in one frame time are accumulated. When signals for one transmission field are collected, the deshuffling unit 91 sends out the signals to the expander 94. At the same time, the control signal showing whether the added recorded signal is of long playing mode or not is issued to the interpolation filter 95. The expander 94 detects the variable length code word from the input signals, and decodes, and multiplies the inverse number in quantizing, and expands the signal. The expanded signal is sent out to the inverse orthogonal transformation unit 96. The inverse orthogonal transformation unit 96 processes the input signal by two-dimensional inverse orthogonal transformation, and issues to the deshuffling unit 97.

The deshuffling unit 97 generates Y signal R-Y signal, B-Y signal in field unit from the input signals, and stores in the second memory 99. The signals of one transmission field stored in the second memory are issued twice in two fields to the interpolation filter 95. An example of interpolation filter is shown in Fig. 28. The interpolation filter interpolates the sample values decimated by using other sample values of the lines comprising the sample points. Signals of the transmission field are supplied to an input terminal 110 from the beginning line. In this transmission field, pixels of the 2N-th field before compression and the (2N+1)-th field are alternately disposed. D-FF 111 a through f delay the input sample values by one sample time. The output signals of input terminal 110 and D-FF 111b, 111d, 111f are multiplied by the coefficients by the multipliers 112 a through d, and the products are issued to an arithmetic unit 113. The arithmetic unit 113 divides the sum of input signals of four systems by 128, and issues to a switch 114. The switch 114 is changed over to the S side when the transmitted sample values of the field number to be reproduced at the present and in the standard mode are sent out from the D-FF 111c, and changed over to the H side in the case of the sample points at the position to be interpolated. As a result, signals of 2N field and (2N+1) field are restored, and supplied to an output terminal 115.

Thus, according to the embodiment, one transmission field is continuously issued in the period of two fields, and non-transmission sample points are interpolated by the interpolation filter on the basis of the produced transmission sample values, so that the signals recorded in the long playing mode may be reproduced without substantial addition of circuits.

In this embodiment, meanwhile, the interpolation filter is composed of a filter in line, but it is not limitative. For example, the mean of preceding and succeeding sample values may be used, or the filter of three lines as shown in Fig. 23 (a) may be used. As the decimating filter, moreover, the sub-sample filter in field is used, but other filters such as sub-sample filter between fields may be used.

Among the sub-sample filters mentioned herein, in the sub-sample filter in field (see Fig. 6 (a)), the sample positions are offset in every line. Accordingly, when compressing the band further by orthogonal transformation or the like after execution of sub-sample coding, the compression rate deteriorates significantly. However, in the transmission band, as shown in Fig. 30 (a), the horizontal band that can be transmitted can be increased. To the contrary, in the case of the sub-sample filter (see Fig. 6 (c)) not offsetting the position of the sample to be transmitted, the transmission region becomes as shown in Fig. 30 (b). In this case, since the high band in the horizontal direction cannot be transmitted at all, the picture quality deteriorates significantly by sub-sample coding itself.

Besides, as a method of expanding the horizontal band without offsetting the position of transmission samples between lines, the method of offsetting between fields or between frames (see Fig. 6 (b)) is known. In this method, however, the horizontal band deteriorates significantly in the moving picture portion. A seventh embodiment presents a new sub-sample method for solving this problem.

Fig. 31 is a block diagram of the seventh embodiment. In Fig. 31, numeral 121 is an input unit. 122 is a filter unit, 123 is a decimating unit, and 124 is an output unit.

The sample value of the video signal entered from the input unit 121 in Fig. 31 is limited in band and converted in frequency in the filter unit 122. The sample values limited in band and converted in frequency in the filter unit 122 are decimated in every other sample in the decimating unit 123, and are sent out to the output unit 124.

Fig. 32 is an explanatory diagram of filter characteristic of the filter unit 122 in Fig. 31. In the filter unit 122, the input video signal is first divided into four regions of low band, medium band, high band, and ultrahigh band, in the horizontal direction on the two-dimensional frequency of horizontal frequency and vertical frequency. The medium band and high band are divided by 1/4 frequency of the input sampling frequency. The medium band and high band are further divided into high and low regions in the vertical direction individually.

In the filter unit 122, three regions are taken out first as shown in Fig. 32 (a), that is, horizontal direction low band (L), horizontal direction medium band and vertical direction low band (ML), and horizontal direction high band and vertical direction low band (HL). Next, as shown in Fig. 32 (b), the components of the horizontal direction high band and vertical direction low band (HL) are converted in frequency, and converted into the horizontal direction high band and vertical direction high band.

By limiting in band and converting in frequency by the filter unit 122 as shown in Fig. 32 (b), if sub-sampled without offsetting between lines, effects of aliasing distortion may be removed at the time of decoding.

Fig. 33 shows a block diagram of a first constitution of the filter unit 122. In Fig. 33, numeral 125 is an input unit, 126 is a horizontal low band separating unit, 127 is a horizontal medium band and vertical low band separating unit, 128 is a horizontal high band and vertical low band separating unit, 129 is an inverting unit, 130 is a line number input unit, 131 is an adder, and 132 is an output unit.

The video signal entered from the input unit 125 in Fig. 33 is separated of the components of the low band in the horizontal direction in the horizontal low band separating unit 126. At the same time, the components of the horizontal direction medium band and vertical direction low band are separated in the horizontal medium band and vertical low band separating unit 127. Similarly, the components of the horizontal direction high band and vertical direction low band are separated in the horizontal high band and vertical low band separating unit 128. The components separated in the horizontal high band and vertical low band separating unit 128 are inverted in polarity in every other line according to the line numbers entered from the line number input unit 130 by the inverting unit 129. As a result, the components of the horizontal direction high band and vertical direction low band are converted in frequency to the components of the horizontal direction high band and vertical direction high band. Thus obtained components of the horizontal direction low band, components of horizontal direction medium band and vertical direction low band, and components of horizontal direction high band and vertical direction low band are added in the adder 131, and sent out to the output unit 132. By the constitution in Fig. 33, the signals limited in the band in Fig. 32 (b) are obtained.

Fig. 34 shows the positions of samples to be transmitted in the embodiment. Fig. 34 (a) indicates the sample position of the input video signal. The sample position after band limiting and frequency conversion in the filter unit 122 is shown in Fig. 34 (b). Sequentially the sample position after decimating every other sample by the decimating unit 123 is shown in Fig. 34 (c). In the invention, as shown in Fig. 34 (c), it is not necessary to offset the sample position between lines. Therefore, when further compressing the band by orthogonal transformation or the like, deterioration of compression efficiency may be kept to a minimum.

Fig. 35 is a block diagram of a second constitution example of the filter unit 122. In Fig. 35, numeral 133 is an input unit, 134 is a one-field delay unit, 135, 136 are first filter units, 137, 138 are second filter units, 139, 140 are adders, 141 is a decimating unit, and 142 is an output unit.

The video signal entered from the input unit 133 in Fig. 35 is first fed into the one-field delay unit 134, and is delayed by one field. Next, the input from the input unit 133 and the output of the one-field delay unit 134 are respectively fed into the first filter units 135, 136, and second filter units 137, 138. The one-field delayed signal (first component of one-field delayed signal) limited in band in the first filter unit 135 and the input signal (second component of input signal) limited in band and converted in frequency in the second filter unit 138 are added in the adder 139, and a sample value of a new one-field delay signal is obtained. Similarly, the input signal (first component of input signal) limited in band in the first filter unit 136 and the one-field delayed signal (second component of input signal) limited in band and converted in frequency in the second filter unit 137 are added in the adder 140, and a sample value of a new input signal is obtained. The sample values of the new video signals obtained in the adder 139 and the adder 140 are decimated in every other sample in the decimating unit 141, and sent out to the output unit 142.

Fig. 36 shows the transmission bands of the first component and second component obtained by band limiting and frequency conversion in the first filter units 135, 136 and second filter units 137, 138 in Fig. 35. Fig. 36 (a) refers to the transmission band of the first component obtained in the filter unit, which is composed of the sum of two regions of horizontal direction low band and horizontal direction medium and vertical direction low band. Fig. 36 (b) refers to the transmission band of the second component obtained in the second filter unit, in which the component of the horizontal direction high band and vertical direction low band is converted in frequency to the horizontal direction high band and vertical direction high band. By limiting the bands of the first component and second component as shown in Fig. 36, the aliasing distortion due to sample decimating may be eliminated at the time of decoding.

Fig. 37 shows the position of transmission sample of the second embodiment. Fig. 37 (a) relates to the state of interlacing of the input signals of the first field and second field, in which the solid line denotes the second field, and the broken line represents the first field. Fig. 37 (b) shows the position of a new sample limited in band and converted in frequency by using the first filter unit and second filter unit. Fig. 37 (c) shows the position of the transmission sample after decimating in the decimating unit 21. As shown in Fig. 37 (c),in this embodiment, the phase of transmission sample differs between the first field and second field. As a result, the phase of the first component and second component (transmitted as sample values of the second field) to the first field is also different. Hence, the distortion in the coupling portion of the horizontal direction medium band and horizontal direction high band can be canceled.

Finally, the data coded by the sub-sample coding apparatus of the invention is decoded by using filter means for limiting the band and converting the frequency same as used in the invention.

In such constitution, in the sub-sample coding apparatus of the invention, the components of the high band in the vertical low band are converted in frequency as high band in the vertical high band, and transmitted. Accordingly, the aliasing distortion due to sub-sample of the components of the high band of the vertical low band occurs in the medium band of the vertical high band, thereby making it possible to separate from the transmission information.

Therefore, according to the invention, without having to offset the transmission sample value in every line, the high frequency components in the horizontal direction can be transmitted. Hence, while minimizing the picture quality deterioration in sub-sample coding, the efficiency of the subsequent orthogonal transformation or band compression may be enhanced.

When the second constitution example is employed in the filter unit 2, the transmission sample values are offset between adjacent fields or frames, and the high frequency components in the vertical low band are transmitted by multiplexing on the transmission sample values of the adjacent frame or field. It is hence possible to offset the transmission sample values of the low frequency components in the vertical low band and high frequency components in the vertical low band. Therefore, the distortion of the components in the coupling portion of the medium band and high band can be reduced.

Meanwhile, the invention is also capable of eliminating the effects of aliasing distortion by employing various methods of frequency conversion, other than the frequency conversion described in the foregoing embodiments. The invention has been described specifically herein by referring to practical embodiments. The filter, block forming means, and orthogonal transformation employed in the invention may be realized in various other manners than those mentioned in the embodiments. Besides, the processing sequence of decimating filter, motion detection, block forming, and orthogonal transformation may be realized also in other combinations than those described in the foregoing embodiments.

## Claims

1. A high efficiency coding apparatus comprising sample value decimating means for decimating sample values of input video signals in every other sample value to obtain transmission sample values, block forming means for collecting a plurality of transmission sample points obtained by the decimating means over plural fields to form blocks, and orthogonal transformation means for transforming orthogonally in every block obtained by the block forming means.

2. The apparatus of claim 1, wherein sample values of video signals of consecutive two fields entered by the sample value decimating means are decimated of sample values in the different horizontal and vertical positions between fields and in every other sample value.

3. The apparatus of claim 1, wherein the decimating means determines by using the sample points existing between lines in which the transmission sample points belong to a same field, between lines adjacent on the screen and belonging to consecutive fields, or between lines on the same position on the screen and belonging to consecutive frames, and the positions of the sample points to be decimated differ between lines.

4. The apparatus of claim 1, wherein the transmission field composing means prepares two fields composed of transmission sample values of horizontal H and vertical V lines obtained by the decimating means, separates the two fields into V groups containing two lines between adjacent fields on the screen, sequentially arranges the transmission sample values of different fields in every transmission sample value in every one of V groups to compose the information of one line composed of 2H transmission sample values, thereby composing one transmission field of horizontal direction 2H and vertical direction V lines.

5. A high efficiency coding apparatus comprising sample value decimating means for decimating sample values of input video signals in every other sample value to obtain transmission sample values, block forming means for collecting a plurality of transmission sample points obtained by the decimating means over plural fields to form blocks, motion detecting means for judging whether a moving picture block with a large motion or a still picture block with a small motion among fields in the block in every block obtained by the block forming means, orthogonal transformation means for transforming orthogonally on the basis of the orthogonal transform in each field when detected as moving picture block by the motion detecting means, or transforming orthogonally by combining plural fields as one still picture when detected as still picture block, coding means for coding the orthogonally transformed transmission sample value, and information transmission means for coding and transmitting the information showing whether detected as moving picture block or detected as still picture block by the motion detecting means.

6. The apparatus of claim 5, wherein sample values of video signals of consecutive two fields entered by the sample value decimating means are decimated of sample values in the different horizontal and vertical positions between fields and in every other sample value.

7. The apparatus of claim 5, wherein the decimating means determines by using the sample points existing between lines in which the transmission sample points belong to a same field, between lines adjacent on the screen and belonging to consecutive fields, or between lines on the same position on the screen and belonging to consecutive frames, and the positions of the sample points to be decimated differ between lines.

8. The apparatus of claim 5, wherein the orthogonal transformation means processes a moving picture by three-dimensional orthogonal transformation, and a still picture block by two-dimensional orthogonal transformation.

9. The apparatus of claim 5, wherein the orthogonal transformation means separates each block into blocks of every field and orthogonally transforms the operation result of the sum and difference in the horizontal and vertical directions between blocks when the input block is a moving picture block, and separates into blocks of frame unit and orthogonally transforms the operation result of sum and difference of vertical components between blocks in the case of a still picture block.

10. The apparatus of claim 5, wherein the transmission field composing means prepares two fields composed of transmission sample values of horizontal H and vertical V lines obtained by the decimating means, separates the two fields into V groups containing two lines between adjacent fields on the screen, sequentially arranges the transmission sample values of different fields in every transmission sample value in every one of V groups to compose the information of one line composed of 2H transmission sample values, thereby composing one transmission field of horizontal direction 2H and vertical direction V lines.

11. A high efficiency coding apparatus comprising decimating means for decimating sample values to obtain transmission sample points by using a filter utilizing only the sample points in the same field in the portion with a large motion of the input video signal, and using a filter utilizing sample values between plural fields or between plural frames in the portion with a small motion, block forming means for collecting a plurality of transmission sample points obtained by the decimating means over plural fields to form blocks, orthogonal transformation means for transforming orthogonally transmission sample points within the block obtained by the block forming means, and coding means for coding the orthogonally transformed transmission sample values. In the moving picture portion, sample values are decimated by using the filter utilizing the sample values in the same field, and in the still picture portion, sample values are decimated by using the filter utilizing the sample values between plural frames.

12. The apparatus of claim 11, wherein the decimating means determines by using the sample points existing between lines in which the transmission sample points belong to a same field, between lines adjacent on the screen and belonging to consecutive fields, or between lines on the same position on the screen and belonging to consecutive frames, and the positions of the sample points to be decimated differ between lines.

13. A high efficiency coding apparatus comprising block forming means for collecting a plurality of transmission sample points of the input video signal over plural fields to form blocks, motion detecting means for judging whether a moving picture block with a large motion or a still picture block with a small motion among fields in the block in every block obtained by the block forming means, decimating means for decimating sample values to obtain transmission sample points by using a filter utilizing only the sample points in the same field for the sample values in the block detected as a moving picture block by the motion detecting means, and using a filter utilizing sample values between plural fields or between plural frames for the sample values in the block detected as a still picture block, orthogonal transformation means for transforming orthogonally on the basis of the orthogonal transform in every plural fields when detected as a moving picture block by the motion detecting means, and transforming orthogonally by combining the plural fields as one still picture when detected as a still picture block, coding means for coding the orthogonally transformed transmission sample values, and information transmission means for coding and transmitting the information showing whether detected as a moving picture block or detected as a still picture block by the motion detecting means.

14. The apparatus of claim 13, wherein wherein the decimating means determines by using the sample points existing between lines in which the transmission sample points belong to a same field, between lines adjacent on the screen and belonging to consecutive fields, or between lines on the same position on the screen and belonging to consecutive frames, and the positions of the sample points to be decimated differ between lines.

15. The apparatus of claim 13, wherein the orthogonal transformation means processes a moving picture by three-dimensional orthogonal transformation, and a still picture block by two-dimensional orthogonal transformation.

16. The apparatus of claim 13, wherein the orthogonal transformation means separates each block into blocks of every field and orthogonally transforms the operation result of the sum and difference in the horizontal and vertical directions between blocks when the input block is a moving picture block, and separates into blocks of frame unit and orthogonally transforms the operation result of sum and difference of vertical components between blocks in the case of a still picture block.

17. A high efficiency coding apparatus comprising sample value decimating means for decimating sample values of input video signals in every other sample value to obtain transmission sample values, transmission field composing means for composing one field of transmission field from transmission sample values of consecutive two input fields obtained by the sample value decimating means, first block forming means for forming blocks from the transmission sample values contained in one field or plural fields of the transmission field obtained by the transmission field composing means, second block forming means for forming blocks containing the same sample value number as the first block forming means from the sample values contained in one field or plural fields of the input field, and orthogonal transformation means for orthogonally transforming in every block obtained by the first block forming means when high compression is required, and orthogonally transforming in every block obtained by the second block forming means when low compression is required.

18. A decoding apparatus for reproducing a compressed signal from a medium, by composing one field or consecutive two fields of transmission field by using a sub-sample filter, and forming an orthogonal transform block by using the one or plural transmission fields, which comprises a transformer for inversely and orthogonally transforming the reproduction signal from the medium, a memory for storing the output signal of the transformer and sending out one identical transmission field consecutively in two-field period, and a filter for interpolating a non-transmission sample value on the basis of the transmission sample value sent out from the memory.

19. The apparatus of claim 18, wherein the filter is realized by a filter in line for interpolating by using the transmitted sample values on the same line comprising the sample points to be interpolated.

20. A high efficiency coding apparatus comprising filter means for processing input video signals by band limiting and frequency converting, and decimating means for decimating the video signals limited in band by the filter means.

21. The apparatus of claim 20, wherein the filter means is a filter in which the input video signal is separated into four regions of low band, medium band, high band, and ultrahigh band in the horizontal direction on the two-dimensional frequency in the horizontal direction and vertical direction, and the medium band is further separated into two regions of medium band of vertical low band and and medium band of vertical high band, and the high band is separated into two regions of high band of vertical low band and high band of vertical high band, and at this time the components of low band, middle band of vertical low band and high band of vertical low band are taken out, and the components of the high band of vertical low band are converted in frequency to high band of vertical high band.

22. The apparatus of claim 20, wherein the filter means is composed of a first filter in which the input video signal is separated into four regions of low band, medium band, high band, and ultrahigh band in the horizontal direction on the two-dimensional frequency in the horizontal direction and vertical direction, and the medium band is further separated into two regions of medium band of vertical low band and and medium band of vertical high band, and the high band is separated into two regions of high band of vertical low band and high band of vertical high band, and at this time the components of low band and middle band of vertical low band are taken out as first components, a second filter for converting the components of the high band of vertical low band in frequency to high band of vertical high band to be taken out as second components, and an adder for adding the first components of the present field obtained in the first filter and the second components of the adjacent fields or adjacent frames obtained in the second filter to obtain the sum as the sample value of a new present field, and adding the second components of the present field obtained in the second filter and the first components of the adjacent fields or adjacent frames obtained by the first filter to obtain the sum as a new sample value of the adjacent fields or adjacent frames.
